# EUROPEAN PATENT SPECIFICATION

(11) **EP 4 235 562 B1**
(45) Date of publication and mention of the grant of the patent: **05.11.2025**
(21) Application number: 22894000.3
(22) Date of filing: 07.09.2022
(51) Int. Cl.: G06T 1/20, G06T 15/00, G06F 9/445, G06F 8/41

(54) **IMAGE PROCESSING METHOD AND ELECTRONIC DEVICE**
BILDVERARBEITUNGSVERFAHREN UND ELEKTRONISCHE VORRICHTUNG
PROCÉDÉ DE TRAITEMENT D'IMAGE ET DISPOSITIF ÉLECTRONIQUE

(30) Priority: 24.11.2021 CN 202111406568
(43) Date of publication of application: 30.08.2023
(73) Proprietor: Honor Device Co., Ltd., Shenzhen, Guangdong 518040 (CN)
(72) Inventor: SUN, Li, Guangdong 518040 (CN); YIN, Zhaoyang, Guangdong 518040 (CN); LIU, Jinxiao, Guangdong 518040 (CN); LI, Wei, Guangdong 518040 (CN)
(74) Representative: Gill Jennings & Every LLP
(86) International application number: PCT/CN2022/117650
(87) International publication number: WO 2023/093212

(56) References cited:
- WO-A1-2021/129087
- CN-A- 104 616 327
- CN-A- 109 087 389
- CN-A- 111 179 150
- CN-A- 114 663 272
- CN-A- 115 018 955
- US-A1- 2004 095 348
- US-A1- 2010 141 653
- US-A1- 2019 232 164

## Description

This application claims priority to Chinese Patent Application No. 202111406568.X, filed with the China National Intellectual Property Administration on November 24, 2021 and entitled "IMAGE PROCESSING METHOD AND ELECTRONIC DEVICE".

### TECHNICAL FIELD

This application relates to the image processing field, and in particular, to an image processing method and an electronic device.

### BACKGROUND

With development of electronic devices, images that need to be displayed are increasingly refined. In a process of rendering a refined image, because accurate shading needs to be performed on a model in the image, running time and power overheads of a shader are also increased. Consequently, frame loss and frame freezing may occur in an image display process.

WO 2021/129087 A1 discloses a shader automatic simplification method and system based on a drawing instruction stream. The method comprises: acquiring a drawing instruction stream, extracting a target shader from the drawing instruction stream, and creating a simplified shader that differs only in code from the target shader; intercepting the current frame in a drawing instruction that includes a drawing initiation instruction of the target shader, and taking same as a specific frame; obtaining the consumed time of the simplified shader by means of measuring the time required to use the simplified shader to draw the specific frame; obtaining an error of the simplified shader by means of measuring a pixel difference value between a drawing frame drawn by the simplified shader and the specific frame when the drawing instruction corresponding to the specific frame is executed; and obtaining, by means of screening, an optimal simplified shader according to the consumed time and the error of the simplified shader.

US 2019/0232164 A1 discloses distributing shaders between client machines for precaching.

### SUMMARY

Embodiments of this application provide an image processing method and an electronic device. When a shader (for example, a to-be-simplified shader) needs to be invoked, a corresponding shader is run to simplify a shading operation, so as to reduce running time and power overheads.

To achieve the foregoing objective, the following technical solutions are used in embodiments of this application:

According to a first aspect, an image processing method is provided, applied to an electronic device. An application is installed on the electronic device, the electronic device executes a rendering instruction stream delivered by the application, and the method includes: invoking, by the electronic device, a graphics processing unit (GPU) to perform a shading operation by using a first shading instruction, where a shader bound to a first program (program) indicated by the first shading instruction includes a first shader, where the first shader is different from a second shader, the second shader is a shader bound to the first program indicated by a second shading instruction, and the second shading instruction is included in the rendering instruction stream.

Based on this solution, an example of a solution for simplifying the shading operation is provided. In this solution, the application may indicate, by using the rendering instruction stream, the electronic device to perform a rendering operation including the shading operation. In response to the rendering instruction stream, the electronic device may perform a simplified operation by using a corresponding simplified shader. For example, the application may indicate to perform the shading operation by using the second shader bound to the first program. Correspondingly, the electronic device may send a second shading instruction to the GPU, to indicate the GPU to perform the shading operation. The second shading instruction may instruct the GPU to perform the shading operation by using a simplified shader (such as the first shader) bound to the first program. The first shader is a simplified shader corresponding to the second shader. The first shader implements a same or similar shading function as the second shader, and an amount of code of the first shader is less than that of the second shader. In this way, the GPU can normally complete a corresponding shading operation by running the first shader according to the second shading instruction, so as to implement lower time consumption and power consumption than those of running the second shader.

The method further includes: obtaining, by the electronic device, the second shader based on the rendering instruction stream. The electronic device determines the first shader based on the second shader, where the first shader corresponds to the second shader. Based on this solution, an example of a solution for determining the first shader is provided. In this solution, the electronic device may obtain a shader to be used by the application (such as an original shader or the second shader) from the rendering instruction stream. The electronic device may further determine the corresponding first shader based on the second shader. In this way, the determined first shader may correspond to the second shader, so as to ensure that a shading operation expected by the application can be implemented by running the first shader, and reduce time consumption and power consumption.

The method further includes: replacing, by the electronic device, the second shader with the first shader. Based on this solution, a solution implementation for performing the shading operation by using the first shader is provided. In this solution, the second shader is replaced with the first shader. In this way, when the application needs to invoke the second shader, the GPU may invoke the corresponding first shader to perform the shading operation.

The replacing the second shader with the first shader is specifically: binding, by the electronic device, the first shader to the first program. Based on this solution, a specific implementation for replacing a shader is provided. It may be understood that the application may invoke a program bound to the shader, to invoke the shader. In this example, the first shader may be bound to the first program. Therefore, when the application needs to invoke the second shader by using the first program, the electronic device may correspondingly invoke the first shader currently bound to the first program, and further perform a more efficient shading operation by using the first shader.

In a possible design, the method further includes: binding a storage address of binary code of the first shader to the first program.

In a possible design, the method further includes: binding an identifier of the first shader to the first program. Based on this solution, a specific implementation for replacing a shader is provided. In this solution, the identifier of the first shader (such as an ID of the first shader) may be bound to the first program. In this way, when delivering an instruction to invoke the first program, the application may find, based on the ID of the first shader bound to the first program, the first shader bound to the first program (such as a storage address), and further perform a shading operation based on the found first shader.

Before the binding an identifier of the first shader to the first program, the method further includes: unbinding the second shader from the first program based on an identifier of the second shader. Based on this solution, a solution implementation for binding the first shader is provided. Before the first shader is bound, the second shader may be bound to the first program. Therefore, if the first shader is directly bound to the first program, binding of the first shader to the first program may not be implemented. In this example, the second shader may be unbound from the first program, to obtain the first program to which no shader is bound. Then, the first shader may be bound to the first program to which no shader is bound, so that only the first shader can be bound to the first program.

In a possible design, the method further includes: compiling source code of the first shader into binary code; and storing the binary code of the first shader. Based on this solution, an implementation solution in a process of invoking the first shader is provided. In this example, the source code of the first shader may be compiled before the shading operation is performed by using the first shader, to obtain the corresponding binary code. In this way, when the first shader is used, the binary code may be directly invoked to run, so as to improve efficiency.

In a possible design, before the binding, by the electronic device, the first shader to the first program, the method further includes: obtaining, by the electronic device, an identifier of the first program based on the rendering instruction stream. Based on this solution, a solution implementation for binding a simplified shader by the electronic device is provided. It should be understood that, to correctly replace the second shader with the first shader, it is necessary to determine the first program that needs to be bound to the first shader. In this example, different programs may be identified by using identifiers of the programs (such as program IDs). The electronic device may obtain the identifier of the first program according to an instruction in the rendering instruction stream, so that subsequent replacement is performed accurately.

The electronic device obtains code of a plurality of third shaders, the code of the plurality of third shaders includes code of the first shader, and the determining the first shader based on the second shader includes: determining the code of the first shader based on code of the second shader. Based on this solution, an example of a solution for determining the first shader based on the second shader is provided. Before the first shader needs to be obtained, the electronic device obtains code of a plurality of simplified shaders (that is, the third shaders). The plurality of third shaders include a shader corresponding to (or matching) the code of the second shader, and the matched shader is the first shader.

In a possible design, the electronic device stores the code of the plurality of third shaders, and the obtaining code of a plurality of third shaders includes: reading the code of the plurality of third shaders from an address for storing the code of the plurality of third shaders. Based on this solution, an example of a solution for obtaining the code of the plurality of third shaders is provided. The electronic device may store the code of the plurality of third shaders. In this way, when the plurality of third shaders need to be used to determine the first shader, the plurality of third shaders may be read from the corresponding storage address. In other embodiments, some or all of the code of the plurality of third shaders may be obtained from the cloud, or some or all of the code of the plurality of third shaders may be determined by the electronic device.

In a possible design, the obtaining the second shader based on the rendering instruction stream is specifically: obtaining the identifier and a storage address of the second shader based on the rendering instruction stream, where the storage address stores the code of the second shader, and the code includes source code or binary code. Based on this solution, an example of a specific solution for obtaining the second shader is provided. In this example, an identifier and a storage address of a shader (that is, the second shader) bound to the first program may be obtained based on the rendering instruction stream. The storage address may be an address for storing the source code of the second shader, or may be an address for storing the binary code of the second shader. For example, a resource of the shader bound to the first program may be determined by using the ID of the first program, to determine the ID and the storage address of the second shader.

The electronic device further stores code of a plurality of fourth shaders, the code of the plurality of fourth shaders is in a one-to-one correspondence with that of the plurality of third shaders, and the code of the plurality of fourth shaders includes source code or binary code. Based on this solution, a specific example of a solution for determining the first shader is provided. For example, the fourth shaders (that is, to-be-simplified shaders) may have a one-to-one correspondence with the simplified third shaders. In this case, the first shader that meets a requirement in the third shaders may be determined by using the code of the fourth shaders.

The code of the plurality of fourth shaders includes code of a fifth shader, the code of the fifth shader matches the code of the second shader, and the fifth shader corresponds to the first shader. The determining the first shader based on the second shader includes: obtaining the code of the second shader based on the storage address of the second shader; matching the code of the second shader against the code of the plurality of fourth shaders, to obtain the fifth shader; and obtaining the first shader by using the fifth shader. Based on this solution, a specific example of a solution for determining the first shader that matches the second shader is provided. In this example, the fifth shader that matches the second shader may be found from the plurality of fourth shaders based on the code of the second shader. The fifth shader may correspond to one simplified shader in the plurality of third shaders. The simplified shader corresponding to the fifth shader may be the first shader that needs to be determined.

In a possible design, that the code of the fifth shader matches the code of the second shader is specifically: the code of the fifth shader is the same as the code of the second shader, or a hash value of the code of the fifth shader is the same as a hash value of the code of the second shader. Based on this solution, a specific matching mechanism is provided. When the matching mechanism is met, it may be considered that the matching succeeds, and a corresponding matching item may be used as a matching result. It should be noted that, in this example, regardless of whether code of a matched shader (for example, the code of the second shader, or the code of the plurality of fourth shaders) is source code or binary code, a corresponding shader that meets a requirement may be obtained through screening according to the matching mechanism.

The first shader and the second shader are of a same type. Based on this solution, a corresponding limitation is imposed on the first shader and the second shader. In this way, after the second shader is replaced with the first shader, a correct shading operation can be ensured.

In a possible design, both the first shader and the second shader are vertex shaders; or both the first shader and the second shader are fragment shaders. Based on this solution, two examples of the types of the first shader and the second shader are provided. In other embodiments, the first shader and the second shader may alternatively be other types of shaders different from vertex shaders or fragment shaders.

In a possible design, the rendering instruction stream includes a first instruction and a second instruction, the first instruction is used to indicate the identifier of the first program, and the second instruction is used to indicate the shader bound to the first program. The electronic device includes an interception module and an obtaining module, and the method further includes: obtaining, by the interception module, the first instruction and the second instruction; sending, by the interception module, the first instruction and the second instruction to the acquiring module; obtaining, by the obtaining module, the identifier of the first program according to the first instruction; and obtaining, by the obtaining module, the identifier and the storage address of the second shader according to the second instruction. Based on this solution, an example of a modularization-based solution for implementing this embodiment of this application is provided. In this example, the interception module may be configured to intercept an instruction, for example, may be configured to intercept the first instruction and the second instruction. The interception module may directly recall another instruction in the rendering instruction stream to a graphics library to implement native logic.

In a possible design, the electronic device further includes a matching module, and the method further includes: sending, by the obtaining module, the identifier and the storage address of the second shader to the matching module. Based on this solution, the obtaining module may send the obtained identifier and storage address of the second shader to the matching module, so as to facilitate subsequent operations.

In a possible design, the electronic device further includes a memory, the memory stores the code of the plurality of third shaders, and the code of the plurality of third shaders includes the code of the first shader; the memory further stores the code of the plurality of fourth shaders, and the code of the plurality of fourth shaders is in a one-to-one correspondence with that of the plurality of third shaders; the code of the plurality of fourth shaders includes source code or binary code; and the method further includes: reading, by the matching module, the code of the plurality of fourth shaders from the memory. Based on this solution, the matching module may read a plurality of to-be-simplified shaders (such as the fourth shaders) stored in the memory, to subsequently determine a to-be-simplified shader corresponding to the code of the second shader, and further determine the corresponding first shader from the plurality of third shaders.

In a possible design, the code of the plurality of fourth shaders includes the code of the fifth shader, the fifth shader matches the second shader, the fifth shader corresponds to the first shader, and the method further includes: reading, by the matching module, the code of the second shader based on the storage address of the second shader; matching, by the matching module, the code of the second shader against the code of the plurality of fourth shaders, to obtain the fifth shader; and obtaining, by the matching module, the first shader by using the fifth shader. Based on this solution, the matching module may match the code of the second shader against the code of the plurality of to-be-simplified shaders. The matching may be source code-based source code matching or hash value matching. The matching may alternatively be binary code-based binary matching or hash value matching. The to-be-simplified shader, such as the fifth shader, corresponding to the second shader may be determined by using the matching mechanism.

In a possible design, the electronic device further includes a replacement module, and the method includes: binding, by the replacement module, the storage address of the binary code of the first shader to the first program. Based on this solution, the replacement module may bind the storage address of the simplified shader (that is, the first shader) corresponding to the second shader to the first program. For example, the replacement module may replace a pointer indicating the storage address of the binary code of the first shader with the first program, so that the binary code of the first shader can be directly invoked by invoking the first program.

In a possible design, the code is source code; the replacement module unbinds the second shader from the first program; and the replacement module binds the identifier of the first shader to the first program. Based on this solution, the matching module may perform source code-based matching based on the source code of the second shader and the obtained source code of the plurality of fourth shaders. Then, the replacement module may perform a source code-based replacement operation. For example, the replacement module may learn, from the matching module through matching, the storage address and the ID of the source code of the successfully matched first shader. In this way, the replacement module may bind the ID of the first shader to the first program. Because the ID of the first shader has a unique mapping relationship with the storage address of the source code of the first shader, the code of the first shader can be successfully obtained when the first program is invoked.

In a possible design, a compilation module is further disposed in the electronic device, and the method further includes: sending, by the replacement module or the obtaining module, a storage address of the first shader to the compilation module, where the compilation module compiles the code of the first shader to obtain the binary code of the first shader; and storing, by the compilation module, the binary code of the first shader in the memory. Based on this solution, on the basis of replacing the source code information (such as the ID of the first shader) with the first program, the source code of the first shader may be further compiled, so as to facilitate subsequent quick invoking of the first shader.

In a possible design, the method further includes: sending, by the compilation module, the storage address of the binary code of the first shader to the replacement module. Based on this solution, the compilation module may send the compiled storage address of the binary code of the first shader to the replacement module, so that the replacement module binds the binary information to the first program.

In a possible design, the first instruction is the same as the second instruction, the first instruction is used to indicate the identifier of the first program and the shader bound to the first program, and the obtaining module obtains the identifier of the first program and the identifier and the storage address of the second shader according to the first instruction. Based on this solution, an example of a solution for a relationship between the first instruction and the second instruction is provided. For example, the first instruction and the second instruction may be one or more instructions. The instruction may be used to confirm the ID of the first program, and may be further used to confirm (the ID and/or the storage address) of the shader bound to the first program.

According to a second aspect, an electronic device is provided. The electronic device includes one or more processors and one or more memories. The one or more memories are coupled to the one or more processors, and the one or more memories store computer instructions. When the one or more processors execute the computer instructions, the electronic device is enabled to perform the image processing method in any one of the first aspect and the possible designs.

According to a third, not claimed aspect, a chip system is provided. The chip system includes an interface circuit (or referred to as a communications interface) and a processor. The interface circuit is interconnected with the processor through a line. The interface circuit is configured to: receive a signal from a memory, and send a signal to the processor, where the signal includes computer instructions stored in the memory. When the processor executes the computer instructions, the chip system performs the image processing method in any one of the first aspect and the possible designs.

According to a fourth aspect, a computer-readable storage medium is provided. The computer-readable storage medium includes computer instructions, and when the computer instructions are run, the image processing method in any one of the first aspect and the possible designs is performed.

According to a fifth, not claimed aspect, a computer program product is provided. The computer program product includes instructions, and when the computer program product is run on a computer, the computer is enabled to perform the image processing method in any one of the first aspect and the possible designs according to the instructions.

It should be understood that technical features of the technical solutions provided in the second aspect, the third aspect, the fourth aspect, and the fifth aspect may all correspond to the image processing method provided in any one of the first aspect and the possible designs. Therefore, beneficial effects that can be achieved are similar, and details are not described herein again.

### BRIEF DESCRIPTION OF DRAWINGS

FIG. 1 is a schematic diagram of delivering a shading instruction;
FIG. 2 is a schematic logical diagram of a shading instruction;
FIG. 3 is a schematic diagram of delivering a shading-related function in a loading process;
FIG. 4 is a schematic composition diagram of an electronic device according to an embodiment of this application;
FIG. 5 is a schematic diagram of a functional module according to an embodiment of this application;
FIG. 6A to FIG. 6C are a schematic diagram of module interaction according to an embodiment of this application;
FIG. 7 is another schematic diagram of a functional module according to an embodiment of this application;
FIG. 8A and FIG. 8B are another schematic diagram of module interaction according to an embodiment of this application;
FIG. 9 is a schematic flowchart of an image processing method according to an embodiment of this application;
FIG. 10 is a schematic composition diagram of an electronic device according to an embodiment of this application; and
FIG. 11 is a schematic composition diagram of a chip system according to an embodiment of this application.

### DESCRIPTION OF EMBODIMENTS

Currently, an application installed on an electronic device may deliver an image rendering command, so that the electronic device performs a corresponding image rendering operation, to obtain related data of a display image (for example, data such as colors and shapes of parts of a model included in the image), and further display different images to a user by using a display of the electronic device based on the obtained related data.

For example, the rendering command may include a shading instruction, which is used to instruct the electronic device to perform, by using a shader (Shader) indicated by the rendering command, a shading operation on a vertex (Vertex) and/or a fragment (Fragment) of the model included in the image. The fragment may be a unit that includes one or more points in the image. For example, a graph (such as a triangle) included in the image may correspond to a fragment. Data corresponding to the fragment may include corresponding data such as a color, a depth, and a texture. The shader may be an editable program used to implement image rendering. The shader may include a vertex shader (Vertex Shader) for performing vertex shading, and a fragment shader (Fragment Shader) for performing fragment shading. The fragment shader may also be referred to as a pixel shader (Pixel Shader). It should be noted that, in embodiments of this application, the shader may be an applet running on a GPU. By running the applet, the GPU may implement vertex or fragment shading.

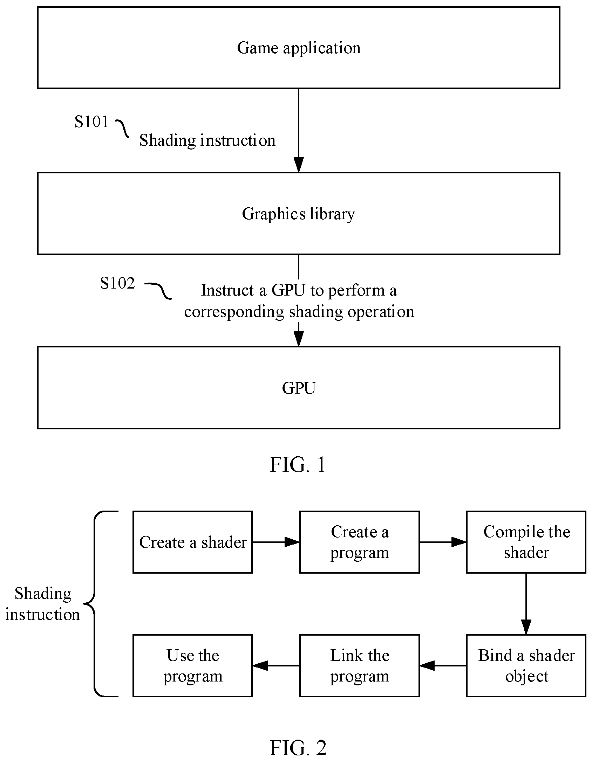

For example, the application is a game application installed on the electronic device. With reference to FIG. 1, the game application may deliver a series of instruction streams that include a shading instruction (for example, perform S101). The shading instruction may include one or more successively delivered functions. The instruction stream may be transferred to a graphics library in the electronic device, so that the graphics library instructs, based on the instruction stream including the shading instruction, a rendering component (such as a graphics processing unit (Graphics Processing Unit, GPU)) in the electronic device to perform a corresponding shading operation (for example, perform S102).

In some embodiments, with reference to FIG. 2, the shading instruction delivered by the game application may include a function for creating a shader object, a function for creating a program (program), a function for compiling a shader, a function for binding a shader object, a function for linking a program, a function for using a program, and the like that are delivered successively.

The following uses an open graphics library (Open Graphics Library, openGL) rendering platform as an example to describe the function in the shading instruction.
1. glCreateShader (shadertype): The glCreateShader function may be used to create a shader object. A shader object may correspond to a fragment of shader code. In this example, the glCreateShader function may carry a parameter such as shadertype, and shadertype may be carried in the glCreateShader function in a numerical form. Different values of shadertype may be used to indicate gl_vertex_shader or gl_fragment_shader.

The glCreateShader function indicating gl_vertex_shader is used to create a vertex shader. The vertex shader object is invoked, to perform a vertex shading operation by using corresponding code of the vertex shader.

Correspondingly, the glCreateShader function indicating gl_fragment_shader is used to create a fragment shader. The fragment shader object is invoked, to perform a fragment shading operation by using corresponding code of the fragment shader.

It should be noted that, in some implementations, code of a shader may be stored in a file corresponding to a shader source (Shader Source). For example, the corresponding file may be a text file with an extension of .shader. One shader object may correspond to one shader source. Alternatively, a shader source may be used to define a shader object.

2. glCreatProgram (void): The glCreatProgram function may be used to create a void program and return a non-zero value (program ID) that can be referenced. It may be understood that, in a running process of the game application, a vertex shader and a fragment shader are generally used simultaneously. In this way, a program bound to at least one vertex shader and one fragment shader is invoked, to implement one-off invoking of the vertex shader and the fragment shader.

In this example, a program object created by using the glCreatProgram function may be used to attach a shader object. That is, the shader object is bound to the program, so that the electronic device can smoothly invoke a corresponding vertex shader and a corresponding fragment shader according to an instruction of the game application, and run code stored in a shader source corresponding to the shader, to perform a shading operation by using the shader.

3. glCompileShader (shader): The glCompileShader function may be used to compile source code of a shader.

It should be understood that a file of a shader source corresponding to the shader may store source code (for example, code in a format such as C++ or Java) corresponding to the shader. Because the source code cannot be directly recognized by the electronic device, it is usually necessary to interpret the source code (that is, convert the source code into binary code in a compiler) and then execute the binary code to implement running of the source code. To facilitate quick invoking, before using the shader, for example, during loading, the game application may compile source code of most (or all) shaders that need to be used into binary code and store the binary code. In this way, in a subsequent running process, when a shader needs to be invoked, the electronic device may invoke and run the compiled binary code, so as to avoid a delay caused by an interpretation process, thereby improving efficiency.

After compiling and storing the binary code, the electronic device may add, to a corresponding shader ID, a pointer used to indicate an ID and a storage address of the binary code, so that the corresponding binary code can be obtained based on the shader ID in a subsequent invoking process.

In this example, the game application may implement compiling of the shader by using glCompileShader (shader). The parameter shader carried in the function may be identified by using an ID of a created shader object.

It should be noted that the glCompileShader function may be delivered after an instruction that is delivered by the game application to create a corresponding shader object. In different implementations, a sequence of an operation of compiling a shader and an operation of creating a program is not limited. For example, an instruction of glCompileShader (shader) may be delivered before an instruction of glCreatProgram (void). For another example, an instruction of glCreatProgram (void) may be delivered after an instruction of glCreatProgram (void). For another example, an instruction of glCreatProgram (void) may be delivered simultaneously with an instruction of glCreatProgram (void).

4. glAttachShader (program, shader): The glAttachShader function may bind (or attach) a created shader to a created program for ease of subsequent use of the game application. In some implementations, the parameter program carried in the function may be identified by using an ID of the program. The parameter shader carried in the function may be identified by using an ID of the shader.

With reference to the foregoing description, in a process of drawing a model, both a vertex shader and a fragment shader are used. Therefore, the electronic device may bind at least one vertex shader and one fragment shader to a same program by delivering the glAttachShader function. For example, the vertex shader is bound to the program by using glAttachShader (program ID, VertexShader ID). For another example, the vertex shader is bound to the program by using glAttachShader (program ID, FragmentShader ID).

5. glLinkProgram (program): The glLinkProgram function may be used to link a corresponding program to a current game application.

In this way, the game application may deliver, in a game loading process, an instruction stream including the foregoing five functions. In a subsequent game application running process, a shading operation may be directly performed by invoking a program (for example, by delivering a glUseProgram function) by using binary code corresponding to a vertex shader and a fragment shader.

It should be noted that, in embodiments of this application, the game loading process may be a process in which the game application prepares data in a normal running process after the game application is started. For example, in the loading process, the game application may read the data that needs to be used from an external memory into a memory, so as to quickly invoke the data in the running process. The game application may further perform a pre-compilation process, for example, compile source code in a frequently used shader source into binary code. In the game loading process, the electronic device may display a prompt word such as "loading" on an interface, or the electronic device may display a loading progress bar on the interface. In this process, a dynamic or static image may be further displayed. After the loading is completed, the electronic device may enter a main interface on which the electronic device can interact with a user.

In addition, in some scenarios, the game application may further implement, by delivering some instructions from a function 1 to a function 5, a function of binding a program bound to a shader to an application. For example, before performing compilation (for example, delivering a glCompileShader (shader) function), the game application may determine whether source code of the shader is compiled. For example, the game application may check whether the binary code of the shader is stored in the electronic device, and determine whether the binary code is compiled. If the code of the binary code of the shader is stored, a compilation instruction for the shader may not need to be delivered.

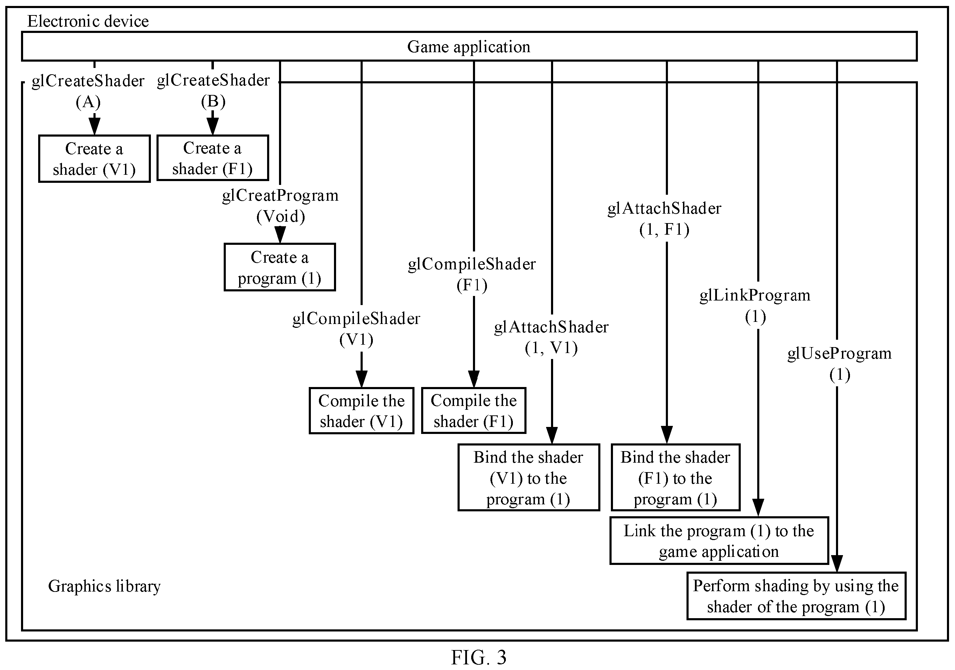

With reference to a specific example and FIG. 3, the following describes the foregoing process from creating a shader object to performing a shading operation by using a shader. That the source code of the shader needs to be compiled is used as an example. It should be noted that, in the following example, descriptions of a plurality of correspondence are involved. In different implementations, the correspondence may be indicated by using code, may be indicated by using a correspondence entry, or may be indicated by using a pointer setting. A specific indication manner of the correspondence is not limited in this application.

The game application may deliver glCreateShader (A), which is used to create a vertex shader object shader (V1), and the electronic device may further map the shader (V1) to a source code fragment V1. The game application may further deliver glCreateShader (B), which is used to create a fragment shader shader (F1), and the electronic device may further map the shader (F1) to a source code fragment F1. V1 may be an ID of the shader (V1), and F1 may be an ID of the shader (F1).

In some implementations, the electronic device may store a pointer indicating a shader ID and a storage address of corresponding source code. Alternatively, the electronic device may store a correspondence between a shader ID and a storage address of corresponding source code.

For example, Table 1 shows an example of the correspondence between a shader ID and a storage address of corresponding source code. The storage address of the source code may include a first address for storing the source code and a length of the source code. Alternatively, the storage address of the source code may include a first address and a last address for storing the source code. Full code of the corresponding stored source code may be obtained by using the storage address. For brief description, an address 1 is used to identify a storage address of V1, an address 2 is used to identify a storage address of F1, and the like.

**Table 1**

| Shader ID | Storage address of corresponding source code |
|---|---|
| V1 | Address 1 |
| F1 | Address 2 |
| ... | ... |

The game application may further deliver glCreateProgram (void), which is used to create a new program. In response to the instruction, the electronic device may create a new program, allocate a new ID to the program, and feed back the ID to the game application. For example, the ID of the new program is 1, and the new program is a program (1).

The game application may further deliver glCompileShader (V1). Correspondingly, the electronic device may compile source code corresponding to the shader (V1) to obtain corresponding binary code. In some embodiments, the electronic device may determine, according to Table 1, that a storage address of source code of a shader whose shader ID is V1 is an address 1, read a source code fragment V1 of the shader (V1) from the address 1, and input the source code into a compiler for compilation to obtain corresponding binary code (for example, binary code V1'). Similarly, the game application may deliver glCompileShader (F1) to compile the shader (F1), to obtain corresponding binary code (for example, binary code F1').

It should be noted that, in some embodiments, after the binary code is obtained through compilation, the binary code may be stored in a file that originally stores the source code, and an address of the binary code may be unchanged. For example, the binary code V1' may be stored in storage space corresponding to the address 1. For another example, the binary code F1' may be stored in storage space corresponding to the address 2. With reference to the foregoing description of the shader source, in this example, the compiled binary code V1' may be stored in a file corresponding to a shader source that stores the source code fragment V1. Similarly, the compiled binary code F1' may be stored in a file corresponding to a shader source that stores the source code segment F1.

In other embodiments, after the binary code is obtained through compilation, the binary code may be stored in a new file that is different from a file that originally stores the source code and whose address may be different from an address for storing the source code. For example, the binary code V1' may be stored in storage space corresponding to the address 1'. For another example, the binary code F1' may be stored in storage space corresponding to the address 2'. In this case, the electronic device may synchronously update an entry in Table 1, for example, add a data column to identify an address for storing binary code. For example, Table 2 shows an example of updating an entry.

**Table 2**

| Shader ID | Storage address of source code | Storage address of binary code |
|---|---|---|
| V1 | Address 1 | Address 1' |
| F1 | Address 2 | Address 2' |
| ... | ... | ... |

In the example of Table 2, source code of a shader whose shader ID is V1 may be stored in the address 1, and binary code of the shader may be stored in the address 1'. Similarly, source code of a shader whose ID is F1 may be stored in the address 2, and binary code of the shader may be stored in the address 2'.

According to Table 2, when the shader (V1) needs to be invoked, the electronic device may learn that a storage address of corresponding binary code is the address 1', and then read the binary code from the address to run. Similarly, when the shader (F1) needs to be invoked, the electronic device may learn that a storage address of corresponding binary code is the address 2', and then read the binary code from the address to run.

Then, the game application may deliver glAttachShader (1, V1), and bind the vertex shader shader (V1) to the program (1). The game application may further deliver glAttachShader (1, F1), and bind the vertex shader shader (F1) to the program (1). In this way, one vertex shader and one fragment shader are bound to the program (1). Similar to the foregoing operation, the electronic device may further update the correspondence table, and update the correspondence between each of the shader (V1) and the shader (F1) and the program (1) to the entry. For example, Table 3 shows another example of updating an entry.

**Table 3**

| Program (program) ID | Shader ID | Storage address of source code | Storage address of binary code |
|---|---|---|---|
| 1 | V1 | Address 1 | Address 1' |
| 1 | F1 | Address 2 | Address 2' |

In the example in Table 2, a program whose program ID is 1 may have a correspondence, such as a binding relationship, with a shader whose ID is V1 and a shader whose ID is F1. It may be further learned from the correspondence shown in Table 3 that source code of a shader whose ID is V1 may be stored in the address 1, and binary code of a shader whose ID is V1 may be stored in the address 1'. It may be further learned from the correspondence shown in Table 3 that source code of a shader whose ID is F1 may be stored in the address 2, and binary code of a shader whose ID is F1 may be stored in the address 2'.

After an instruction for binding a shader to a program is delivered, the game application may deliver a glLinkProgram instruction 1 (such as glLinkProgram (1)), and link the program bound to the shader (V1) and the shader (F1) to the current application (that is, the game application). Therefore, in a subsequent running process, the game application may invoke the program (1) to perform shading by using the shader (V1) and the shader (F1).

For example, the game application may invoke the program (1) by sending glUseProgram (1). Therefore, the electronic device may determine, according to the correspondence shown in Table 3, that a corresponding shader includes the shader (V1) and the shader (F1) when invoking the program (1), and determine a storage address of binary code of each shader. By reading and running the code of the storage address, the program (1) is invoked to perform a shading operation.

In this way, the game application can perform a shading operation by using the shader.

It should be noted that, with reference to the description in Table 1, the foregoing correspondence shown in Table 2 and Table 3 may be further implemented by adding a pointer indicating a storage address of source code (or a storage address of source code and a storage address of binary code) to a code segment corresponding to a shader ID and/or a program ID.

It may be understood that, as an indispensable part of a rendering operation, a shading operation greatly affects time and power overheads of the rendering operation. However, as precision of displaying an image by the electronic device becomes higher, a shading operation that needs to be performed is more complex.

To meet a complex shading requirement, an amount of code of a shader that needs to be used is also gradually increased, and duration consumed by a corresponding shading operation is also significantly increased. Consequently, time and power overheads of a process of rendering an image are increased. This may cause frame loss and frame freezing in a display process, and significantly affect user experience.

To resolve the foregoing problem, embodiments of this application provide an image processing method, so as to determine, according to an instruction delivered by an application, a storage address of an original shader bound to a program indicated by the instruction, determine a corresponding simplified shader by using a matching mechanism, and replace the original shader with the simplified shader with a smaller code amount and bind the shader to the program. Therefore, when a shader is subsequently used, the corresponding simplified shader can be run. This can improve a shading speed, reduce shading duration, significantly reduce calculation overheads caused by a shading operation in a process of performing shading on a complex image, and avoid frame loss and frame freezing.

The following describes in detail the solutions provided in embodiments of this application with reference to the accompanying drawings. It should be noted that, in the following description, an application (for example, a game application) may deliver a rendering instruction stream to instruct an electronic device to perform a rendering operation including a shading operation. In the rendering instruction stream, an original shader bound to the indicated program may be a second shader. A simplified shader corresponding to the second shader may be a first shader. A plurality of to-be-simplified shaders stored in the electronic device may be fourth shaders, and a plurality of simplified shaders corresponding to the plurality of to-be-simplified shaders may also be referred to as a plurality of third shaders. A shader that is in the plurality of fourth shaders and that matches the second shader may also be referred to as a fifth shader. In addition, a second shading instruction may correspond to a first instruction or a second instruction, and the first shading instruction may correspond to a fourth instruction. A first program may be a program (1).

The image processing method provided in embodiments of this application may be applied to an electronic device of a user. For example, the electronic device may be a portable mobile device that has an image processing capability, such as a mobile phone, a tablet computer, a personal digital assistant (personal digital assistant, PDA), an augmented reality (augmented reality, AR)/virtual reality (virtual reality, VR) device, or a media player. The electronic device may alternatively be a wearable electronic device such as a smartwatch. A specific form of the device is not specifically limited in embodiments of this application.

For example, the electronic device to which the solutions provided in embodiments of this application are applied may include a processor, an external memory interface, an internal memory, a universal serial bus (universal serial bus, USB) interface, a charging management module, a power management module, a battery, an antenna 1, an antenna 2, a mobile communications module, a wireless communications module, an audio module, a sensor module, a button, a motor, an indicator, a camera, a display, and a subscriber identification module (subscriber identification module, SIM) card interface. The sensor module may include a pressure sensor, a gyro sensor, a barometric pressure sensor, a magnetic sensor, an acceleration sensor, a distance sensor, an optical proximity sensor, a fingerprint sensor, a temperature sensor, a touch sensor, an ambient light sensor, a bone conduction sensor, and the like. In some embodiments, the electronic device may further include components configured to implement audio-related functions of the electronic device, such as a speaker, a receiver, a microphone, and a headset jack.

In an example, the processor may include a central processing unit (Central Processing Unit/Processor, CPU), an application processor (application processor, AP), a modem processor, a GPU, and an image signal processor (image signal processor, ISP).

It may be understood that the foregoing example does not constitute a specific limitation on the electronic device. In other embodiments, the electronic device may include more or fewer components than those shown in the figure, or combine some components, or split some components, or use different component arrangements. The components shown in the figure may be implemented by hardware, software, or a combination of software and hardware.

In other embodiments, the electronic device may have a layered architecture of software, and corresponding modules or components may be disposed at different layers, to implement corresponding functions.

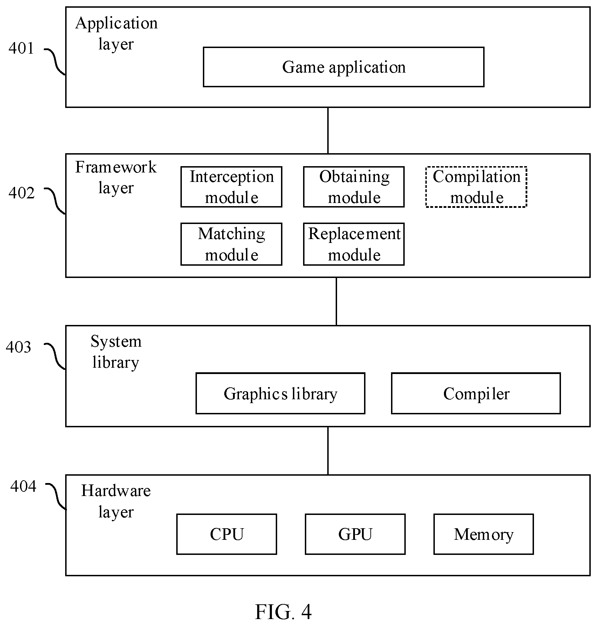

For example, FIG. 4 shows a schematic diagram of a software architecture according to an embodiment of this application. In this example, the electronic device may include several layers, and each layer has a clear role and task. The layers communicate with each other through a software interface. For example, an Android^{®} (Android) operating system is run on the electronic device. The system may be divided into a plurality of layers, which are respectively an application layer (referred to as an application layer 401 for short), an application framework layer 402 (referred to as a framework layer 402 for short), a system library 403, and a hardware layer 404 from top to bottom.

The application layer 401 may include a series of application packages. The application packages may include applications such as Camera, Gallery, Calendar, Calls, Maps, Navigation, WLAN, Bluetooth, Music, Videos, and Messages. In some embodiments of this application, the application layer 401 may include an application that provides a multimedia stream presentation function for a user. For example, the application layer 401 may include various game applications (for example, Genshin Impact^{®}, Game for Peace^{®}, and Honor of Kings^{®}). For another example, the application layer 401 may further include various video applications. In a process of running these application programs that require image rendering (or shading processing in image rendering), corresponding beneficial effects may be achieved by using the solution provided in this embodiment of this application. In the following examples, running a game application is used as an example for description.

The framework layer 402 provides an application programming interface and a programming framework for an application of the application layer 401. The framework layer 402 includes some predefined functions. The framework layer 402 may include a window manager, a content provider, a view system, a resource manager, a notification manager, an activity manager, an input manager, and the like. The window manager provides a window manager service (Window Manager Service, WMS). The WMS may be used for window management, window animation management, a surface manager (surface manager), and a relay station used as an input system. The content provider is configured to: store and obtain data, and enable the data to be accessed by an application. The data may include a video, an image, audio, calls that are made and received, a browsing history and bookmarks, an address book, and the like. The view system includes a visual control, and the view system may be configured to build an application. A display interface may include one or more views. The resource manager provides various resources for an application. The notification manager enables an application to display notification information in a status bar, and may be configured to convey a notification message. The notification message may automatically disappear after a short pause without requiring a user interaction. The notification manager may alternatively be a notification that appears in a status bar at the top of the system in a form of a chart or a scroll bar text. The activity manager may provide an activity manager service (Activity Manager Service, AMS). The AMS may be used for startup, switching, and scheduling of system components (for example, an activity, a service, a content provider, and a broadcast receiver), and management and scheduling of application processes. The input manager may provide an input manager service (Input Manager Service, IMS). The IMS may be used for system input management, for example, touchscreen input, key input, and sensor input. The IMS extracts an event from an input device node, and assigns the event to an appropriate window through interaction with the WMS.

In this embodiment of this application, to implement the image processing method provided in embodiments of this application, an interception module, an obtaining module, a matching module, a compilation module, and a replacement module may be disposed at the framework layer 402. In other embodiments, the framework layer 402 may further include more or fewer modules, which are configured to implement the solutions provided in embodiments of this application. For example, when binary code of a simplified shader has been stored in the electronic device, the framework layer 402 may further include no compilation module, but directly invokes the stored binary code to run the simplified shader.

The system library 403 may include a plurality of functional modules, for example, a surface manager, a media framework (Media Framework), a standard C library (Standard C library, libc), openGL, an open graphics library for embedded systems (opengl for Embedded Systems, openGL ES), Vulkan, sqlite, and Webkit. In this embodiment of this application, a rendering mechanism of a rendering platform provided based on openGL is used as an example. In this embodiment of this application, the system library 403 may further include runtime (runtime). For example, runtime based on an Android system may be Android runtime. Runtime may provide a function of a virtual machine. When the electronic device needs to run various types of code, each code may be executed in a virtual environment provided in runtime. For example, in a compilation (or pre-compilation) process, the electronic device may input source code to a compiler in runtime, and obtain, through processing by the compiler, binary code corresponding to the source code in a current virtual environment. In an example in which rendering is performed by using an OpenGL platform, the electronic device may compile source code by using an FXC HLSL compiler provided by Microsoft (Microsoft) in Android runtime, and then convert a result obtained through compilation into a GLSL language format by using a shader byte code cross compiler (HLSLcc), so as to facilitate subsequent invoking of a graphics library and a GPU.

In this example, the electronic device may further include the hardware layer 404. For example, the hardware layer 404 may include various hardware components used to implement functions of the electronic device. For example, the hardware layer 404 may include a GPU configured to perform rendering processing, a CPU configured to perform data processing, and a memory configured to perform data storage. The memory may include an internal storage medium embedded in the CPU or the GPU, or may include a flash memory that is disposed in the electronic device and that has a fast read/write function, or may include a non-volatile storage medium that is in the electronic device and that is configured to store a large file.

With reference to the example in FIG. 3, the software architecture shown in FIG. 4 is provided in this embodiment of this application. In a process of loading the game application, an instruction stream delivered by the game application may be received at the framework layer, and a corresponding interface that invokes a graphics library performs a corresponding response. This implements the process from creating a shader to linking a program bound to the shader to a game application in FIG. 3.

It should be noted that, in this embodiment of this application, the memory of the electronic device may store some shaders that need to be simplified (referred to as to-be-simplified shaders for short) and code of a simplified shader corresponding to the to-be-simplified shader. The to-be-simplified shader may be some or all of shaders that need to be invoked in an application running process. The code of the simplified shader stored in the memory may be source code, or may be binary code. For these simplified shaders, the electronic device may replace the original shader bound to the program with one of these simplified shaders by using the following solution. Therefore, in a subsequent process of running the game application, when the shader needs to be invoked, the code of the simplified shader may be run by invoking the corresponding program, to perform a shading operation, so as to reduce power and time overheads of the shading operation.

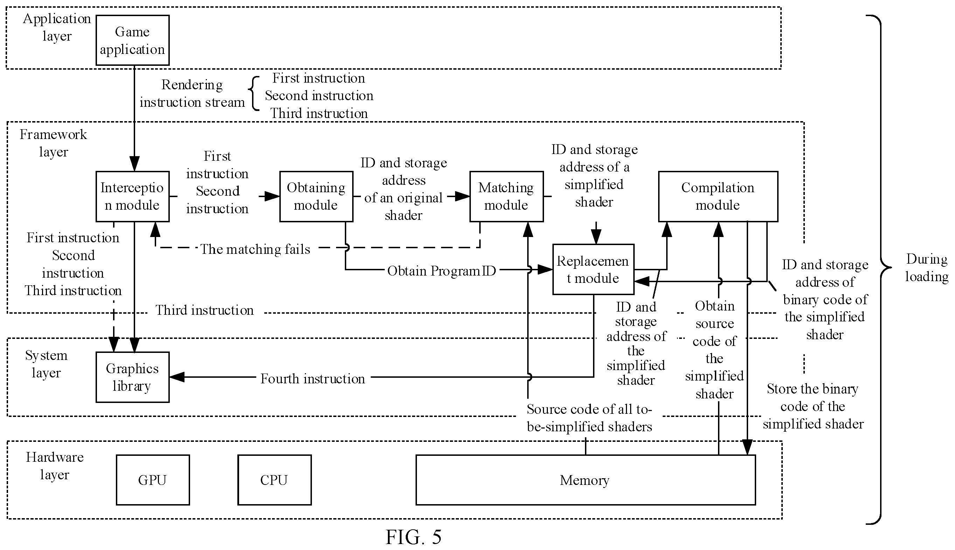

In the following description, with reference to the composition of the electronic device provided in the foregoing example (the architecture shown in FIG. 4), the image processing method provided in embodiments of this application is described in detail,
for example, with reference to FIG. 5. The game application may deliver a rendering instruction stream in a loading process. The rendering instruction stream may include an instruction used to create a shader, an instruction used to create a program, an instruction used to compile the shader, an instruction used to bind the shader to the program, and an instruction used to link the program to a game application. With reference to the foregoing description, in other embodiments, the rendering instruction stream may not include an instruction used to compile a shader.

The rendering instruction stream may include a first instruction, a second instruction, and a third instruction. The first instruction may be one or more instructions that carry an ID of a program or that can be used to obtain the ID of the program. The second instruction may be one or more instructions that carry an ID and/or a storage address of a shader bound to the program, or that can be used to obtain the ID and/or the storage address of the shader bound to the program. The third instruction may be one or more instructions in the rendering instruction stream that are different from the first instruction or the second instruction.

It should be understood that, in some scenarios, there are some instructions that not only can carry a program ID (that is, included in the first instruction), but also can be used to obtain an ID and/or a storage address of a corresponding shader (that is, included in the second instruction). Therefore, in different implementations, the first instruction and the second instruction may include at least a part of overlapping. In contrast, in other scenarios, instructions included in the first instruction and the second instruction may be completely different.

In the solutions provided in this application, after a game starts to be loaded, instructions in the rendering instruction stream may be separately input to the interception module. The interception module may be configured to intercept the first instruction and the second instruction in the rendering instruction stream delivered by the game application. The interception module may further transfer the first instruction and the second instruction to the obtaining module.

For another instruction (for example, the third instruction) in the rendering instruction stream, such as a glCreateShader function, a glCreatProgram function, a glCompileShader function, or a glAttachShader function, the interception module may return the third instruction to the graphics library, so as to ensure implementation of native logic.

In addition, the interception module may further transfer the first instruction to the graphics library by transferring the first instruction to the obtaining module.

In an example, the first instruction is intercepted. The interception module may intercept the first instruction by using a hook (Hook) technology. The interception module may specifically implement instruction interception in the following manner: When the game application is started, the interception module modifies a function pointer list in a thread local storage (Thread Local Storage, TLS) of a game thread, and replaces a graph function pointer recorded in the list with a substitute pointer. The graph function pointer is a function pointer that points to an implementation function of the graphics library. The substitute pointer is a function pointer that points to an implementation function of another module (for example, the obtaining module). For example, the function pointer of the first instruction that points to the implementation function of the graphics library and that is recorded in the foregoing function pointer list may be replaced with the function pointer that points to the implementation function of the obtaining module. Therefore, the another module performs a corresponding operation according to an instruction intercepted by the interception module. Then, when the application delivers a corresponding instruction that needs to be intercepted, the interception module may implement interception of the instruction and transmission to the another module by using a hook (Hook) API. Interception of the second instruction is similar to interception of the first instruction, and details are not described herein again.

The obtaining module may be configured to obtain an ID of a current program according to the first instruction from the interception module. The obtaining module may be further configured to obtain, according to the second instruction from the interception module, an ID and a storage address of an original shader bound to the current program. For example, the obtaining module may parse the first instruction, to confirm that the ID of the current program is 1. For another example, the obtaining module may parse the second instruction, to obtain shaders bound to the current program, including an original shader shader (V1) whose ID is V1 and whose source code storage address is an address 1, and an original shader shader (F1) whose ID is F1 and whose source code storage address is an address 2.

With reference to the foregoing relationship between the first instruction and the second instruction, in this embodiment of this application, when the first instruction is different from the second instruction, the obtaining module may directly call back the first instruction to the graphics library after acquiring the ID of the current program. When the first instruction is the same as the second instruction, the first instruction is not called back (as shown in an example in FIG. 5), but a subsequent operation continues to be performed.

The obtaining module may further transmit the ID and the storage address of the original shader to the matching module. For example, the obtaining module may transmit the ID and the storage address of the source code (address 1) of the shader (V1) to the matching module. The obtaining module may further transmit the ID and the storage address of the source code (address 2) of the shader (F1) to the matching module.

The matching module may be configured to perform source code matching based on the ID and the storage address of the original shader from the obtaining module, to determine a simplified shader corresponding to the original shader.

In this example, the electronic device may store code of a plurality of to-be-simplified shaders. In this example, the code may be an uncompiled source code. The electronic device may further store a simplified shader corresponding to each to-be-simplified shader.

In some implementations, the electronic device may simplify a correspondence, to maintain a correspondence between code of each simplified shader and code of an original shader that is not simplified. For example, Table 4 shows an example of the simplified correspondence.

**Table 4**

| Source code of a to-be-simplified shader | Source code of a simplified shader |
|---|---|
| Source code segment 1 of the to-be-simplified shader | Simplified source code segment 1 |
| Source code segment 2 of the to-be-simplified shader | Simplified source code segment 2 |
| ... | ... |

As shown in Table 4, the source code of the simplified shader that corresponds to the source code segment 1 of the to-be-simplified shader may be the simplified source code segment 1. Similarly, the source code of the simplified shader that corresponds to the source code segment 2 of the to-be-simplified shader may be the simplified source code segment 1, and so on.

It should be noted that, during specific implementation, code may be directly stored in the simplified correspondence in Table 4. For example, the source code segment 1 of the to-be-simplified shader may include all code of the source code segment 1 of the to-be-simplified shader, and the simplified code segment 1 may include all code of the simplified code segment 1. In other embodiments, a storage address of the code may be stored in the simplified correspondence in Table 4. For example, the source code segment 1 of the to-be-simplified shader may include a storage address of the source code segment 1 of the to-be-simplified shader in the memory, and the simplified code segment 1 may include a storage address of the simplified code segment 1 in the memory. For example, a storage address of each code segment is stored in the simplified correspondence.

Before performing a matching operation, the matching module may read all source code segments of the to-be-simplified shader in the simplified correspondence from the memory.

The matching module may read a corresponding code segment from the memory based on the storage address of the original shader bound to the current program from the obtaining module. For example, the matching module may read source code of the shader (V1) from the address 1, that is, a source code segment V1. The matching module may read source code of the shader (F1) from the address 2, that is, a source code segment F1.

Then, the matching module may perform the matching operation by using the source code segment of the original shader and the source code segment of the to-be-simplified shader. In this embodiment of this application, a matching mechanism may be: When all code of two code segments that are compared is completely consistent, it is considered that the matching succeeds. On the contrary, when the two code segments that are compared include at least a part of different code, it is considered that the matching fails. The matching process may be line-by-line source code matching based on code of each code segment, or may be implemented in a hash value matching manner.

Matching of the source code segment V1 is used as an example. The matching module may separately match the source code segment V1 against all code segments of the to-be-simplified shader. When there is a matching success item, a simplified shader corresponding to the matched code segment of the to-be-simplified shader may be a simplified shader corresponding to the source code segment V1.

A matching process of the source code segment F1 is similar.

To describe the matching process provided in this embodiment of this application more clearly, in an example, Table 5 shows a specific example of a simplified correspondence.

**Table 5**

| Storage address of source code of a to-be-simplified shader | Storage address of source code of a simplified shader |
|---|---|
| Address 3 | Address 3a |
| Address 4 | Address 4a |
| ... | ... |

In this example, the simplified correspondence may include: The source code of the simplified shader that corresponds to the source code of the to-be-simplified shader that is stored in the address 3 is stored in the address 3a. The source code of the simplified shader that corresponds to the source code of the to-be-simplified shader that is stored in the address 4 is stored in the address 4a.

For example, the to-be-simplified shader stored in the address 3 matches the source code segment V1, and the to-be-simplified shader stored in the address 4 matches the source code segment F1. After performing matching processing, the matching module may confirm that the storage address of the source code of the simplified shader corresponding to the shader (V1) is the address 3a. The matching module may confirm that the storage address of the source code of the simplified shader corresponding to the shader (F1) is the address 4a.

In the following example, a simplified shader corresponding to the shader (V1) is a shader (V2), and a storage address of the simplified shader is the address 3a; and a simplified shader corresponding to the shader (F1) is a shader (F2), and a storage address of the simplified shader is the address 4a.

When the matching succeeds, the matching module may transmit the ID and the storage address of the simplified shader to the replacement module for subsequent operations. For example, the matching module may transmit the ID (such as V2) and the storage address (such as the address 3a) of the simplified shader corresponding to the shader (V1) to the replacement module. The matching module may transmit the ID (such as F2) and the storage address (such as the address 4a) of the simplified shader corresponding to the shader (F1) to the replacement module.

Correspondingly, when the matching fails, the shader (V1) and the shader (F1) that are currently bound to a program (1) do not need to be simplified. The matching module may transmit information indicating that the matching fails to the interception module. In this way, the interception module may transmit the second instruction included in the rendering instruction stream to the graphics library. In this way, when the program (1) is subsequently invoked, a corresponding shading operation can be performed based on the shader (V1) and the shader (F1).

The replacement module may be configured to replace information about the shader currently bound to the program (1) with related information of the simplified shader that is sent by the matching module (such as the ID of the simplified shader and the storage address of the simplified shader).

It may be understood that, when the matching module transmits the related information of the simplified shader to the replacement module, the replacement module may receive at least one ID and storage address. For example, the ID may be the ID of the simplified shader, and the storage address may store the source code of the simplified shader. Even if the matching module does not notify the replacement module that the information is the information about the simplified shader, the replacement module may consider that the received information is the information about the simplified shader, and perform a corresponding replacement operation.

In some embodiments of this application, to confirm the current program, the replacement module may further obtain information about the program from the obtaining module. With reference to the foregoing description, the interception module may transmit the first instruction to the obtaining module, and the obtaining module may obtain the ID of the current program (for example, the ID is 1) according to the first instruction. In this example, the replacement module may learn, from the obtaining module, that the ID of the current program is 1. In some other embodiments of this application, the replacement module may further obtain the first instruction from the obtaining module or the interception module, to determine, according to the first instruction, that the ID of the current program is 1. Therefore, the replacement module may confirm that the simplified shader sent by the matching module is replaced with the program (1).

In a possible implementation, the replacement module may implement replacement of a simplified shader by using an unbinding or binding operation process.

For example, the replacement module may unbind the shader (V1) and the shader (F1) on the current program (1) from the program (1) by using a glDetachShader function. In this case, the program (1) to which no shader is bound is obtained.

The replacement module may bind the shader (V2) and the shader (F2) to the program (1) by using a glAttachShader function.

By using the foregoing replacement operation, the shaders currently bound to the program (1) may be the simplified shaders shader (V2) and shader (F2).

After the replacement operation is performed, the correspondence in Table 3 may be updated to the following correspondence shown in Table 6.

**Table 6**

| Program (program) ID | Shader ID | Storage address of source code | Storage address of binary code |
|---|---|---|---|
| 1 | V2 | Address 3a | Address 1' |
| 1 | F2 | Address 4a | Address 2' |

It may be learned that, in the updated correspondence, a shader bound to the program (1) may include the shader (V2), that is, the ID is V2, the storage address of the source code is the address 3a, and the storage address of the binary code is the address 1'. The shader bound to the program (1) may further include the shader (F2), that is, the ID is F2, the storage address of the source code is the address 4a, and the storage address of the binary code is the address 2'.

It should be noted that, in other embodiments of this application, before performing source code replacement, the replacement module may further replace a shader resource of the simplified shader with the program (1) by using a glShaderSource instruction, so as to facilitate invoking by another thread or function in a subsequent rendering process.

In the foregoing example, the source code of the simplified shader currently bound to the program (1) is not compiled. Therefore, in the foregoing correspondence obtained after the replacement, the storage address of the binary code may be incorrect. For example, in this example, the storage address of the binary code is still the storage address of the binary code of the original shader.

When the storage address is indicated in a form of a pointer, a pointer used to indicate the storage address of the binary code currently bound to the program (1) may be null, or content indicated by the pointer is incorrect.

To avoid a problem in a subsequent process of invoking the binary code, after replacing information about the source code on the program (1), the replacement module may transmit the storage address of the source code to the compilation module.

For example, the replacement module may separately transmit the related information of the simplified shader (for example, the ID V2 and the address 3a, or the ID F2 and the address 4a) to the compilation module. The compilation module may read a source code segment of the shader (V2) from the address 3a for compilation, to obtain a corresponding binary code segment for storage, for example, stored in the address 3b. The compilation module may read a source code segment of the shader (F2) from the address 4a for compilation, to obtain a corresponding binary code segment for storage, for example, stored in the address 4b.

The compilation module may transmit related information of the compiled binary code (for example, the ID is V2 and the storage address of the binary code is the address 3b; or the ID is F2 and the storage address of the binary code is the address 4b) to the replacement module, so that the replacement module updates the foregoing relationship, for example, updates a pointer pointing to the storage address of the binary code, or updates a program indicating the storage address of the binary code of the simplified shader. For example, an updated correspondence is shown in Table 7:

**Table 7**

| Program (program) ID | Shader ID | Storage address of source code | Storage address of binary code |
|---|---|---|---|
| 1 | V2 | Address 3a | Address 3b |
| 1 | F2 | Address 4a | Address 4b |

In this way, through comparison between the correspondences obtained before and after the compilation module compiles the binary code, it can be learned that, in the correspondence, a storage address for storing the binary code is updated to the correct address 3b for storing the binary code of the shader (V2) and the correct address 4b for storing the binary code of the shader (F2).

In other embodiments, different from a solution in which the replacement module sends an address of a simplified shader to the compilation module, to indicate the compilation module to perform compilation, the matching module may further send, after determining a simplified shader, an ID and a storage address of the simplified shader to the compilation module for compilation. The compilation module may obtain a code segment of the simplified shader from a corresponding address for compilation, and store corresponding binary code in the memory. After completing the compilation, the compilation module may transmit a storage address of the binary code and a corresponding shader ID to the replacement module, so that the replacement module replaces a pointer indicating the storage address of the binary code of the shader bound to the program.

By using the foregoing replacement process, the replacement module may bind the simplified shader to the program (1). Then, the replacement module may send a new second instruction (such as a fourth instruction) that has an updated binding relationship to the graphics library.

For example, in some embodiments, the replacement module may send the fourth instruction to the graphics library. The fourth instruction may carry the ID and/or the storage address of the shader bound to the current program, or the fourth instruction may be configured to obtain the ID and/or the storage address of the shader bound to the current program.

With reference to the foregoing description, the shader bound to the current program (1) includes the shader (V2 according to the fourth instruction, where the ID of the shader (V2) is V2, the storage address of the source code is 3a, and the storage address of the binary code is 3b. The shader bound to the current program (1) further includes the shader (F2), where the ID of the shader (F2) is F2, the storage address of the source code is 4a, and the storage address of the binary code is 4b. The shader (V2) may be a simplified shader of the shader (V1). The shader (F2) may be a simplified shader of the shader (F1).

In other embodiments, the replacement module may send the fourth instruction to the interception module, and after receiving the information, the interception module may send the fourth instruction to the graphics library.

In this way, when the matching succeeds, the graphics library may determine, according to the fourth instruction, that the shader bound to the program (1) includes the simplified shader shader (V2) and the simplified shader shader (F2). When the program (1) is subsequently invoked, the simplified shader shader (V2) and the simplified shader shader (F2) may be used for a shading operation. In this way, shading efficiency is improved.

Correspondingly, because of the callback mechanism provided in this embodiment of this application, when the matching fails, the graphics library may determine, according to the original second instruction, that the shader bound to the program (1) includes the original shader shader (V1) and the original shader shader (F1). Correspondingly, when the program (1) is subsequently invoked, a shading operation may be performed by using the original shader shader (V1) And the original shader shader (F1).

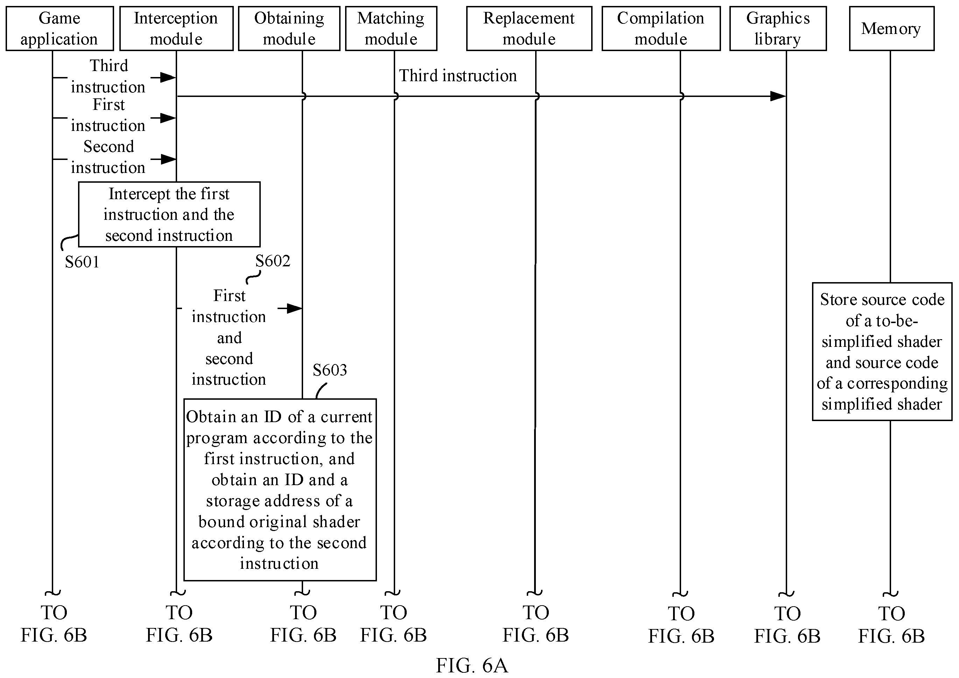

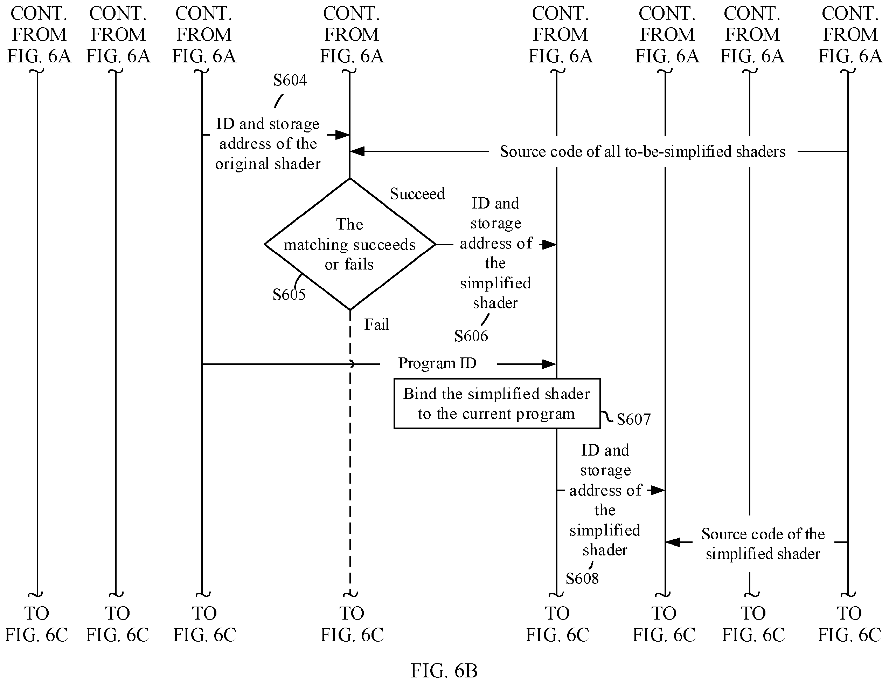

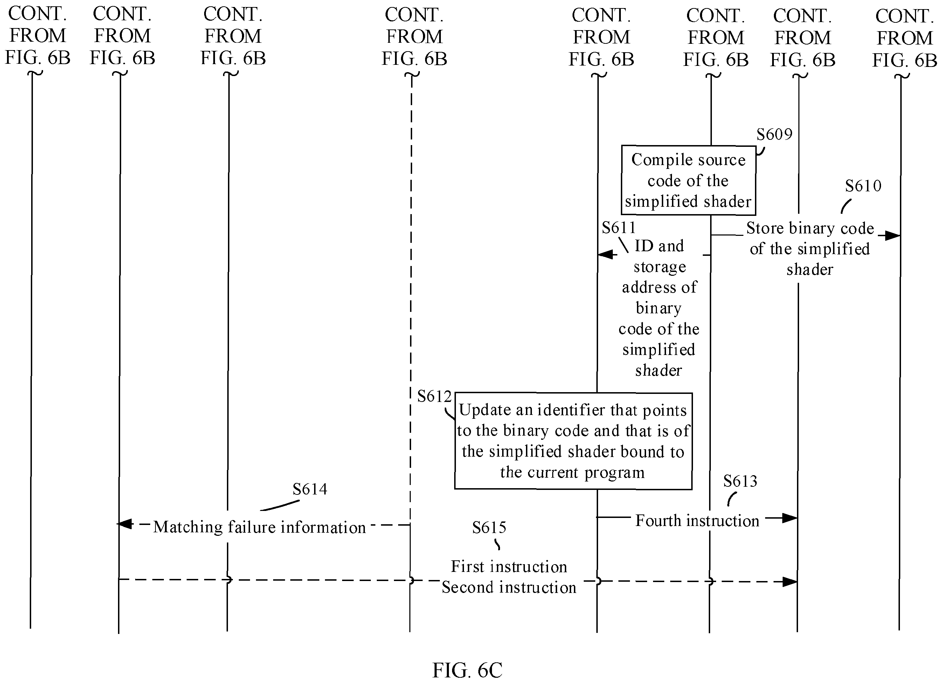

In the foregoing example, the solutions provided in embodiments of this application is described from a perspective of a function of a module with reference to FIG. 5. The following continues to describe the solutions provided in embodiments of this application with reference to interaction between modules shown in FIG. 6A to FIG. 6C.

For example, as shown in FIG. 6A to FIG. 6C, a game application may separately deliver a rendering instruction stream including a first instruction, a second instruction, and a third instruction.

An interception module may call back the third instruction to a graphics library to implement native logic.

In addition, modules at a framework layer may cooperate with each other to implement the solutions provided in embodiments of this application according to the following interaction procedure.

S601: After the game application delivers the rendering instruction stream, the interception module intercepts the first instruction and the second instruction.

For example, the rendering instruction stream may include the first instruction, the second instruction, and the third instruction. The first instruction may be one or more instructions that carry an ID of a program or that can be used to obtain the ID of the program. The second instruction may be one or more instructions that carry an ID and/or a storage address of a shader bound to the program, or that can be used to obtain the ID and/or the storage address of the shader bound to the program. The third instruction may be one or more instructions in the rendering instruction stream that are different from the first instruction or the second instruction.

In different implementations, the first instruction and the second instruction may implement corresponding functions of the first instruction and the second instruction by using a same function or a plurality of functions. That is, the first instruction and the second instruction may be the same. In other embodiments, functions corresponding to the first instruction and functions corresponding to the second instruction may alternatively be different. With reference to the example in FIG. 5, when the first instruction and the second instruction are the same or different, a callback mechanism of the instruction in this solution may be different. For example, when the first instruction and the second instruction are the same, before the entire procedure is completed (for example, a fourth instruction is sent), an electronic device may only perform callback on the third instruction, so as to ensure smooth implementation of the native logic. Correspondingly, when the first instruction and the second instruction are different, after using the first instruction, for example, after obtaining an ID of a current program according to the first instruction, the electronic device may recall the first instruction by using a corresponding module.

In the following example, the first instruction and the second instruction are the same.

S602: The interception module sends the first instruction and the second instruction to an obtaining module.

S603: The obtaining module obtains the ID of the current program according to the first instruction, and obtains an ID and a storage address of a bound original shader according to the second instruction. The original shader may include a shader (V1) and a shader (F1).

It should be understood that, before the game application delivers the second instruction, processes of creating, compiling, and binding a shader have been completed. That is, a program (1) is bound to the shader (V1) and the shader (F1), and the correspondence shown in Table 3 may be correspondingly stored in a memory by using a pointer, and/or a reference table, and/or a fixed field.

In this example, the obtaining module may obtain the ID and the storage address of the bound original shader according to the second instruction. For example, the obtaining module may obtain storage addresses of the shaders, that is, the shader (V1) and the shader (F1) by using a glGetAttachedShaders function. The shader (V1) and the shader (F1) are the original shaders in this example. In other embodiments of this application, the obtaining module may alternatively search for the ID and the storage address of the original shader according to the program ID indicated by the first instruction.

S604: The obtaining module transmits the ID and the storage address of the original shader to a matching module.

For example, the obtaining module may transmit an ID (that is, V1) and a storage address (address 1) of the original vertex shader shader (V1) to the matching module. The obtaining module may further transmit an ID (that is, F1) and a storage address (address 2) of the original segment shader shader (F1) to the matching module.

S605: The matching module matches the original shader. If the matching succeeds, S606 is performed. If the match fails, S614 is performed.

For example, the matching module may read stored source code of a plurality of to-be-simplified shaders from the memory. The matching module may further obtain source code of each original shader based on the storage address of the original shader from the obtaining module, and match the source code of the original shader with the source code of the to-be-simplified shader.

The matching mechanism may include source code matching and/or hash matching, and that source code matching is performed is used as an example. That the matching succeeds means that source code of a to-be-simplified shader that is exactly the same as the source code of the original shader exists in the source code of the plurality of to-be-simplified shaders. Correspondingly, that the matching fails means that source code of a to-be-simplified shader that is exactly the same as the source code of the original shader does not exist in the source code of the plurality of to-be-simplified shaders. That hash matching is performed is used as an example. Each code segment (for example, the source code of the original shader or the source code of the to-be-simplified shader) may correspond to a hash value. A hash value varies with code included in the code segment. Therefore, that the matching succeeds may mean that hash values of two code segments that are matched against each other are the same. Correspondingly, that the matching fails may mean that hash values of two code segments that are matched against each other are different.

When the matching succeeds, it is determined that a current original shader has a simplified shader, and simplification processing needs to be performed. That both the shader (V1) and the shader (F1) are successfully matched is used as an example. A simplified shader of the shader (V1) may be a shader (V2), and a storage address of source code of the shader (V1) may be an address 3a. A simplified shader of the shader (F1) may be a shader (F2), and a storage address of source code of the shader (F1) may be an address 4a. The matching module may continue to perform S606.

Correspondingly, when the matching fails, it is determined that simplification processing does not need to be performed on a current original shader. The matching module may continue to perform S614 and S615.

S606: The matching module sends an ID and a storage address of the simplified shader to a replacement module.

For example, the matching module may send an ID (that is, V2) and a storage address (address 3a) of the shader (V2) to the replacement module. The matching module may send an ID (that is, F2) and a storage address (address 4a) of the shader (F2) to the replacement module.

S607: The replacement module binds the simplified shader to the current program. The current program may be the program (1). Before the simplified shader is bound to the program (1), the original shader may be bound to the program (1).

For example, before performing S607, the replacement module may obtain information about the current program from the obtaining module, for example, obtain the ID (that is, 1) of the current program from the obtaining module. The replacement module may bind the simplified shader to the program (1) by unbinding the shader (V1) from the shader (F1) and binding the shader (V2) to the shader (F2). This implements replacement of the simplified shader and the original shader.

S608: The replacement module transmits the ID and the storage address of the simplified shader to a compilation module.

For example, the replacement module may transmit the ID and the storage address (address 3a) of the shader (V2), and the ID and the storage address (address 4a) of the shader (F2) to the compilation module, so as to implement conversion from source code to binary code.

S609: The compilation module compiles source code of the simplified shader.

S610: The compilation module stores binary code of the simplified shader.

For example, the compilation module may obtain source code of the shader (V2) from the address 3a of the memory, and compile the source code. The compilation module may store binary code obtained through compilation in the address 3b of the memory.

The compilation module may obtain source code of the shader (F2) from the address 4a of the memory, and compile the source code. The compilation module may store binary code obtained through compilation in the address 4b of the memory.

S611: The compilation module sends the ID of the simplified shader and the storage address of the binary code to the replacement module.

For example, the compilation module may send information indicating that the identifier is V2 and the address is 3b to the replacement module. The compilation module may further send information indicating that the identifier is F2 and the address is 4b to the replacement module. In this case, the replacement module is notified of a storage location of the binary code.

S612: The replacement module updates the identifier that points to the binary code and that is of the simplified shader bound to the current program.

For example, storage locations of a shader and binary code are maintained by using a pointer. The replacement module may update a pointer of a corresponding shader based on the ID and the storage address of the binary code of the simplified shader from the compilation module. An updated pointer may be: A pointer of the shader (V2) may point to the address 3b, so that the binary code of the shader (V2) can be obtained from the address 3b. A pointer of the shader (F2) may point to the address 4b, so that the binary code of the shader (F2) can be obtained from the address 4b.

S613: The replacement module sends the fourth instruction to the graphics library.

The same as the first instruction or the second instruction, a program linked to the fourth instruction may still be the program (1). However, different from the second instruction, the program (1) linked to the fourth instruction may be bound to the simplified vertex shader (such as the shader (V2)) and the simplified segment shader (such as the shader (F2)).

S614: The matching module sends matching failure information to the interception module.

S615: The interception module transmits the first instruction and the second instruction to the graphics library.

By using the solutions of S614 and S615, the native logic can be maintained without simplifying the original shader bound to the program, to link the program bound to the original shader to the current game application for subsequent invocation.

In this way, replacement of a shader in a loading phase is completed. Therefore, the replaced simplified shader may be invoked to perform a shading operation in a subsequent game running process.

For example, the game application may deliver a glUseProgram instruction. The glUseProgram instruction may be used to instruct to perform a shading operation by using the program (1). The graphics library may invoke a corresponding application interface to indicate a GPU to execute a shading instruction corresponding to a program. The shading instruction corresponding to the program may be an instruction for performing a shading operation by using the program (1). The GPU may obtain, from the memory, a shader bound to the program. For example, the GPU may determine, by using a correspondence between a program and each of an ID and a storage address of a shader bound to the program, that the storage address of the binary code of the vertex shader shader (V2) bound to the program (1) is the address 3b. The GPU may determine, according to Table 4, that the storage address of the binary code of the segment shader shader (F2) bound to the program (1) is the address 4b. Then, the GPU may perform a shading operation by using the shader bound to the program. For example, by running a code segment whose address is the address 3b, the GPU may perform model vertex shading based on vertex color data delivered by the game application. By running a code segment whose address is the address 4b, the GPU may perform model pixel shading based on pixel color data delivered by the game application.

In this way, the binary code stored in the address 3b and the binary code stored in the address 4b each are binary code of a simplified shader. Therefore, compared with the case of running the original shader, load can be reduced and time consumption can be reduced.

According to the foregoing solutions in FIG. 5 and FIG. 6A to FIG. 6C, a person skilled in the art should have a comprehensive understanding of the solutions provided in embodiments of this application.

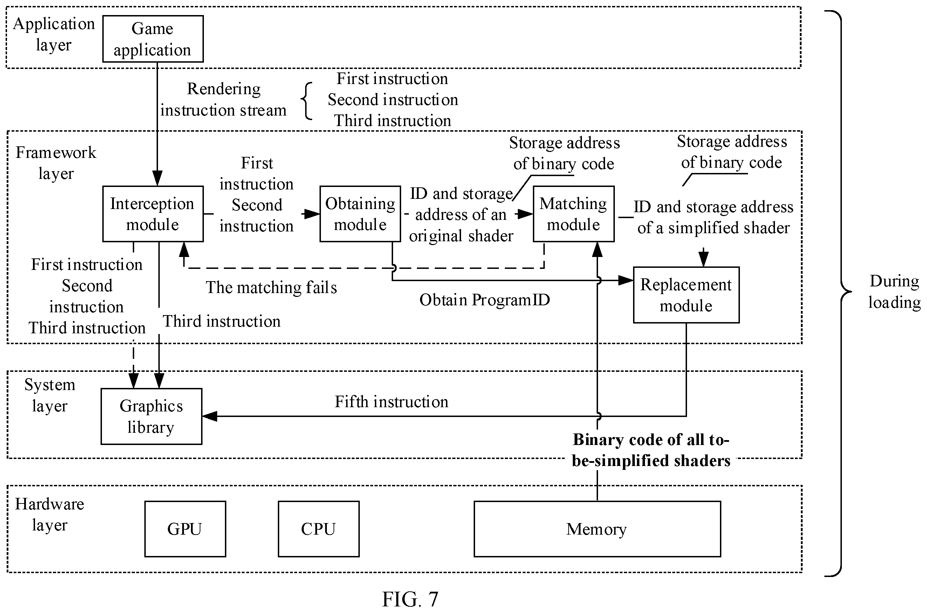

The solutions provided in embodiments of this application further provide an implementation based on a binary matching mechanism. The following provides an example description of the solutions with reference to FIG. 7.

It may be understood that the foregoing matching module performs source code-based matching to determine a simplified shader corresponding to an original shader. In this example, the matching module may perform binary code-based matching to determine a simplified shader corresponding to an original shader.

In this example, different from the foregoing example, code of a shader that is prestored in the electronic device and on which simplification processing needs to be performed (that is, a to-be-simplified shader) may be binary code. In this way, a simplified correspondence may be shown in Table 8.

**Table 8**

| Storage address of binary code of a to-be-simplified shader | Storage address of binary code of a simplified shader |
|---|---|
| Address 3c | Address 3b |
| Address 4c | Address 4b |
| ... | ... |

In this case, reference is made to a schematic diagram of module interaction shown in FIG. 7. Before the matching module performs matching, the matching module may read binary code of each original shader from a corresponding storage address.

Correspondingly, a storage address of the original shader that is sent by the obtaining module to the matching module may be the storage address of the binary code of the original shader. For example, the obtaining module may send a storage address (such as an address 1') of binary code of a shader (V1) to the matching module. The obtaining module may send a storage address (such as an address 2') of binary code of a shader (F1) to the matching module.

The matching module may read the binary code of the shader (V1) from the address 1'. The matching module may read the binary code of the shader (F1) from the address 2'. In a matching mechanism similar to the foregoing source code-based matching process (such as binary matching or hash value matching), the matching module may determine, based on whether the matching succeeds, whether the matching succeeds.

When the matching succeeds, the matching module may transmit a storage address of binary code of a successfully matched simplified shader and a corresponding shader ID to the replacement module. For example, the binary code stored at the address 3b is successfully matched with the binary code of the shader (V1), and the binary code stored at the address 4b is successfully matched with the binary code of the shader (F1). The matching module may transmit information indicating the address 3b and the ID V1 to the replacement module. Correspondingly, the replacement module may replace the current shader (V1) with an identifier used to indicate a corresponding storage address of binary code. For example, the replacement module may perform pointer replacement, so that the replaced pointer can indicate that the storage address of the binary code of the shader (V1) is the address 3b. Similarly, the replacement module may perform pointer replacement, so that the replaced pointer can indicate that the storage address of the binary code of shader (F1) is the address 4b.

An ID and a storage address (such as a storage address of source code and a storage address of binary code) that are used to indicate a replaced shader bound to a program may be shown in Table 9.

**Table 9**

| Program (program) ID | Shader ID | Storage address of source code | Storage address of binary code |
|---|---|---|---|
| 1 | V1 | Address 1 | Address 3b |
| 1 | F1 | Address 2 | Address 4b |
| ... | ... | ... | ... |

It may be learned, from the correspondence shown in Table 9, that in this example, the shader IDs bound to the program (1) are still V1 and F1, and the storage address of the source code is also stored in a code segment corresponding to the original shader. Different from the existing mechanism, after the replacement, when the binary code of the shader (V1) is invoked, the binary code of the simplified shader may be invoked from the address 3b for running. Similarly, when the binary code of the shader (F1) is invoked, the binary code of the simplified shader may be invoked from the address 4b for running. Therefore, code of the original shader can be replaced with code of the simplified shader for running.

It should be understood that in this example, the code of the simplified shader that is stored in the electronic device is binary code. Therefore, a compilation process of the compilation module in the source code matching process does not need to be required, and correspondingly, the compilation module may not set in the electronic device and corresponding communication overheads may be reduced.

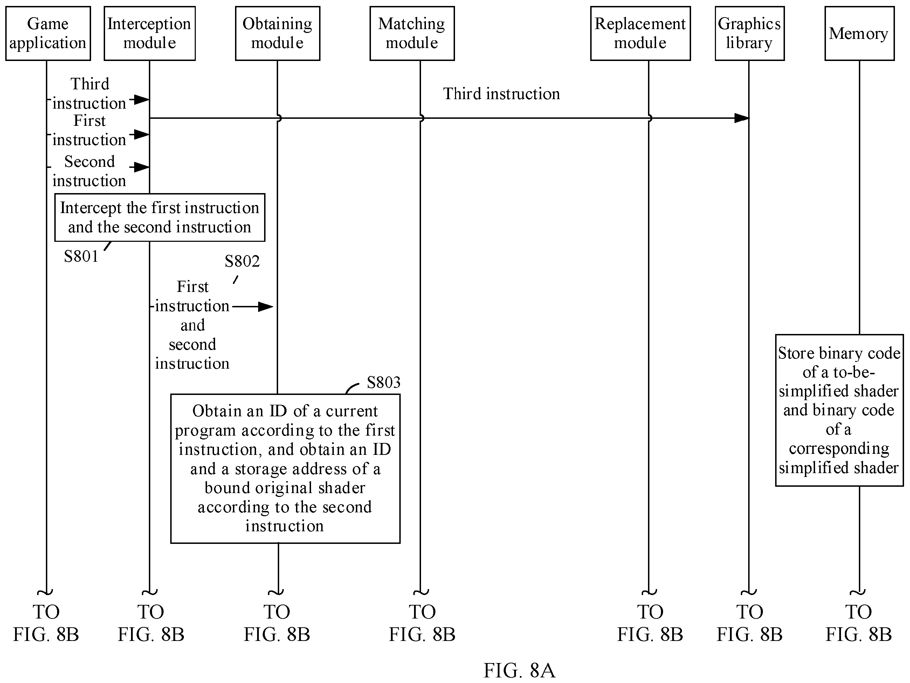

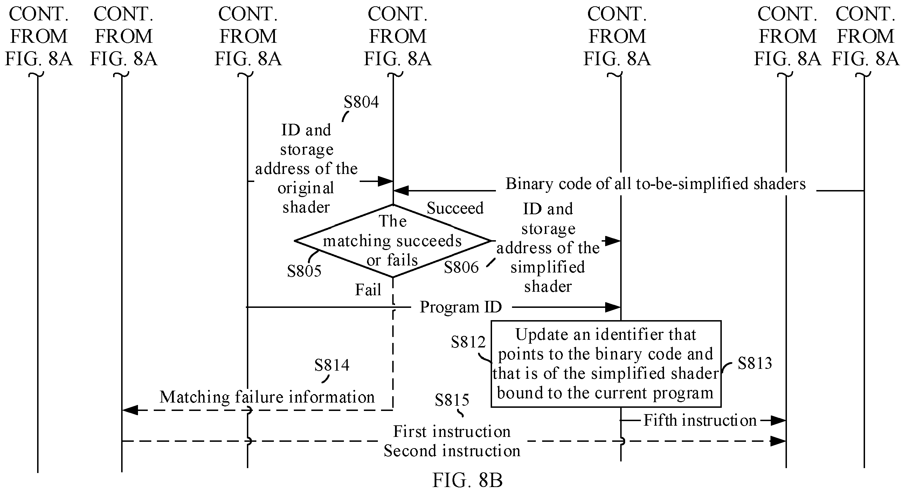

Corresponding to the schematic diagram of module interaction in FIG. 7, FIG. 8A and FIG. 8B are a schematic flowchart of solution implementation based on a binary matching solution according to an embodiment of this application.

In the procedure shown in FIG. 8A and FIG. 8B, an execution process of S801 to S804 is similar to the process of S601 to S604 shown in FIG. 6A to FIG. 6C, and details are not described herein again.

It should be noted that in this example, matching is performed based on binary code in the matching solution. Therefore, in S803, a storage address obtained by the obtaining module may include a storage address of binary code of an original shader. Correspondingly, in S804, a storage address of the original shader that is sent to the matching module may also be a storage address of binary code.

Compared with the implementation procedure shown in FIG. 6A to FIG. 6C, in the solution shown in FIG. 8A and FIG. 8B, the memory may store binary code of all to-be-simplified shaders. The matching module may read the code of all the to-be-simplified shaders from the memory before performing a matching operation (for example, before performing S805 of determining whether the matching succeeds).

The matching module may determine, through binary matching or hash value matching, whether a match corresponding to the binary code of the original shader exists in the to-be-simplified shaders. If there is a match, it indicates that the original shader needs to be simplified. Therefore, different from the procedure shown in FIG. 6A to FIG. 6C, in the procedure shown in FIG. 8A and FIG. 8B, a process of compiling and storing a simplified shader by the compilation module may be omitted. For example, the matching module may perform S806, that is, send an ID and a storage address of binary code of the simplified shader obtained through matching to the replacement module. The replacement module may perform S812, that is, update a pointer that is of a simplified shader bound to a current program (for example, a program (1)) and that points to binary code. Therefore, the correspondence shown in Table 9 is obtained. As shown in FIG. 8A and FIG. 8B, the replacement module may send a fifth instruction (that is, perform S813) to the graphics library, so that the graphics library knows the address of the binary code of the shader bound to the program (1) (for example, the storage address of the binary code of the simplified shader). In addition, similar to the description of FIG. 6A to FIG. 6C, when the matching fails, in the example of FIG. 8A and FIG. 8B, the matching module may feed back matching failure information (for example, perform S814) to the interception module, so that the interception module calls back the first instruction and the second instruction to the graphics library (for example, perform S815) to implement native logic.

In this way, the shader IDs bound to the program (1) are still V1 and F1, and source code of V1 and F1 is also the source code corresponding to the shader (V1) and the source code corresponding to the shader (F1). However, when the binary code is invoked and directly executed, binary code of the simplified shader shader (V2) corresponding to the shader (V1) and binary code of the simplified shader shader (F2) corresponding to the shader (F1) may be invoked and executed. Therefore, the shader can be simplified.

It should be noted that binary code obtained after source code is compiled may vary with a hardware system. For example, a compilation result of a Qualcomm-based hardware system may be different from a compilation result of a MediaTek (MTK)-based hardware system. Therefore, when the solution shown in FIG. 7 or FIG. 8A and FIG. 8B is executed, the memory may store binary code of all simplified shaders in an MTK platform and binary code of all simplified shaders in a Qualcomm platform, so that the binary code can be versatile for different electronic devices. When performing matching, the matching module may select binary code of a corresponding simplified shader based on a current hardware system.

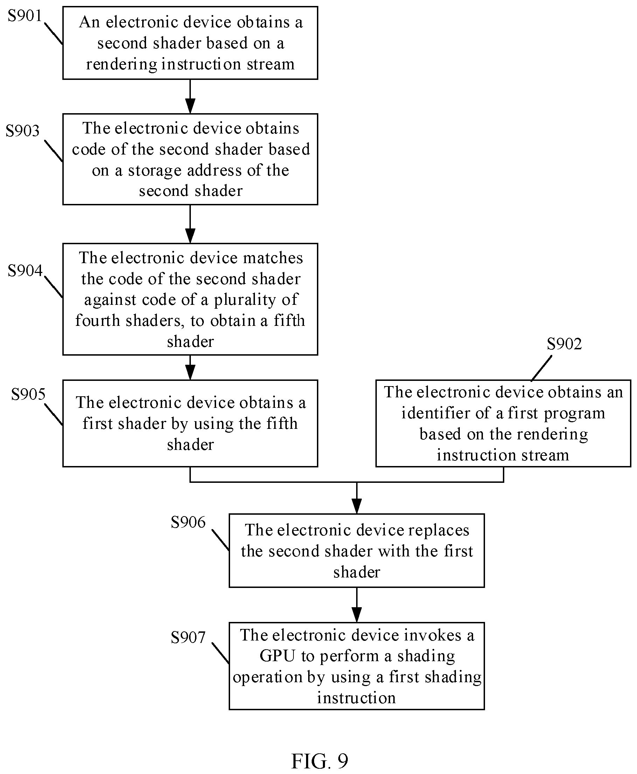

Based on the foregoing descriptions in FIG. 5 to FIG. 8A and FIG. 8B, FIG. 9 shows an image processing method according to an embodiment of this application. The solution may be applied to an electronic device. As shown in FIG. 9, the solution may include the following steps.

S901: The electronic device obtains a second shader based on a rendering instruction stream. The second shader may be an original shader. For example, the electronic device may obtain an identifier and a storage address of the second shader based on the rendering instruction stream. The storage address of the second shader may store code of the second shader, and the code may be source code and/or binary code.

S902: The electronic device obtains an identifier of a first program based on the rendering instruction stream. For example, the identifier of the first program may be an ID of a program (1), such as 1.

S903: The electronic device obtains the code of the second shader based on the storage address of the second shader.

S904: The electronic device matches the code of the second shader against code of a plurality of fourth shaders, to obtain a fifth shader.

Code of the fifth shader is the same as the code of the second shader, or a hash value of the code of the fifth shader is the same as a hash value of the code of the second shader.

The fifth shader corresponds to a first shader. That is, the first shader is a simplified shader of the fifth shader. In this example, the fourth shader may be a to-be-simplified shader. The code of the plurality of fourth shaders includes the code of the fifth shader. The code of the plurality of fourth shaders may be stored in the electronic device, the code of the plurality of fourth shaders is in a one-to-one correspondence with that of a plurality of third shaders, and the code of the plurality of fourth shaders includes source code or binary code.

S905: The electronic device obtains the first shader by using the fifth shader.

For example, the electronic device obtains the code of the plurality of third shaders. The third shader may be a simplified shader corresponding to the to-be-simplified shader. In this example, the code of the plurality of third shaders may include code of the first shader. For example, the electronic device may store the code of the plurality of third shaders. Therefore, the electronic device may separately read the code of the plurality of third shaders from addresses of the code of the plurality of third shaders.

S906: The electronic device replaces the second shader with the first shader.

For example, the electronic device binds the first shader to the first program. For example, the electronic device binds a storage address of binary code of the first shader to the first program. The electronic device may further unbind the second shader from the first program based on the identifier of the second shader. Then, the electronic device may bind an identifier of the first shader to the first program. In some implementations, the electronic device may compile source code of the first shader into binary code, and store the binary code of the first shader.

In this way, the simplified first shader may be bound to the first program.

S907: The electronic device invokes a GPU to perform a shading operation by using a first shading instruction. A shader bound to the first program indicated by the first shading instruction includes the first shader.

In the foregoing example of FIG. 9, that the matching succeeds is used as an example for description. Therefore, when a program is subsequently used, the simplified shader may be directly invoked, so as to simplify a shading process, and reduce time and power overheads. It should be understood that, if the matching fails, corresponding instruction callback may be performed according to the solution provided in the foregoing embodiment, so as to implement native logic. For example, a corresponding shading operation is performed based on the original shader.

According to the foregoing description, the electronic device may determine, according to an instruction delivered by a game application, whether a match of a corresponding simplified shader exists in indicated shaders bound to the program, to determine whether a replacement operation is performed. That is, in the solution provided in this embodiment of this application, regardless of a source code matching solution performed based on source code or a binary code matching solution performed based on binary code, code of a to-be-simplified shader may be stored in a memory of the electronic device.

The to-be-simplified shader may be a part or all of code of all shaders that need to be used in a game running process. In some embodiments, to save storage space, only some shaders may be simplified, so that only code of simplified shaders corresponding to the some shaders can be stored in the memory.

The process of determining a to-be-simplified shader may be performed by the electronic device before the game application delivers the rendering instruction stream. For example, the electronic device may determine the to-be-simplified shader after the game application is installed on the electronic device. In other embodiments, the process of determining a to-be-simplified shader may be performed by the electronic device before delivery, and the to-be-simplified shader and corresponding code of the to-be-simplified shader are preset in the memory of the electronic device.

The following describes the process of determining a to-be-simplified shader with reference to a specific example.

It may be understood that, for a game application, a quantity of shaders that may be used when the application runs on a determined hardware system and types of the shaders are fixed. In this case, a to-be-simplified shader may be obtained through screening among these shaders that may be used.

In this example, in a heavy load scenario of the game application, a shader whose running time exceeds a preset threshold may be obtained through screening in a shading process of the scenario, and is used as the to-be-simplified shader.

The heavy load scenario may be a scenario in which there is a relatively large quantity of rendering operations (or shading operations) in the game running process. For example, in a game that includes a plurality of scenarios, if vertexes and/or pixels in one or more scenarios have relatively high color precision requirements, the scenario may be a heavy load scenario. During specific implementation, an amount of used drawcall may be determined in a rendering process of different scenarios. For example, if the amount of used drawcall is greater than (or greater than or equal to) a preset amount of drawcall, it indicates that the scenario is a heavy load scenario. In other embodiments, because a quantity of game scenarios is fixed, a heavy load scenario may be specified.

It should be noted that in this example, there is no fixed limitation on a quantity of scenarios and that of frame images. That is, one scenario may include one or more frame images.

A role-playing game (Role-Playing Game, RPG) (such as Genshin Impact^{®}) is used as an example. In a running process of the game application, a user may control a role to perform different operations in different scenarios. The game may provide a plurality of maps. Different maps correspond to different scenarios. Different maps have different rendering load requirements. For example, a main scenario of the game may include display of a large quantity of fine models (for example, characters or buildings), and therefore has a relatively high rendering load requirement. In this case, the main scenario may be used as a heavy load scenario.

In a process of determining a heavy load scenario, one game application may determine one scenario with heaviest load, or may determine a plurality of scenarios with relatively heavy load.

A heavy load shader in a heavy load scenario may be determined based on information used during game running.

For example, the information used during game running may include at least one of the following:
drawcall duration (that is, average duration) of each shader, a size of a code amount of the shader, and a quantity of execution times of a shader pair (that is, a shader pair including a vertex shader and a fragment shader). The shader pair may correspond to a program ID.

For example, Table 10 shows an example of the information used during game running.

**Table 10**

| Program ID | Quantity of drawing times | Average duration/ ms | Shader size/byte | Corresponding object | Drawing duration/ms | Load ratio | Cumulative load ratio |
|---|---|---|---|---|---|---|---|
| 1308 | 22709 | 0.135656 | 20874 | Nearby grass | 3080.612104 | 7.70% | 7.70% |
| 70 | 44942 | 0.0397741 | 2061 | Loading interface UI | 1787.527602 | 4.47% | 12.17% |
| 1336 | 987 | 1.58704 | 11397 | Surface topography | 1566.40848 | 3.92% | 16.09% |
| 1302 | 30125 | 0.0511447 | 15651 | Distant mountain 1 | 1540.734088 | 3.85% | 19.94% |
| 1267 | 42205 | 0.0361391 | 1034 | | 1525.250716 | 3.81% | 23.76% |
| 1150 | 987 | 1.52074 | 8199 | Red-crowned crane | 1500.97038 | 3.75% | 27.51% |
| 146 | 2101 | 0.60589 | 22019 | Grass | 1272.97489 | 3.18% | 30.70% |
| 1306 | 13028 | 0.0760138 | 16383 | Distant grass | 990.3077864 | 2.48% | 33.17% |

Table 6 shows information such as drawing duration, average duration, and code sizes that correspond to different shader pairs (that is, different program ID). For example, for the program (1308), the quantity of drawing times is 22709, the average duration is 0.135656 ms, and the code size is 20874 bits. Based on this, the drawing duration, that is, the average duration*the quantity of drawing times, of the program (1308) in the current scenario is 3080.612104 ms. Similarly, Table 6 may further display information about other programs such as the program (70) and the program (1336). The load ratio of each program in a rendering process of the current scenario may be calculated based on the drawing duration.

The programs may be sorted in descending order of load ratios, and shaders corresponding to one or more program with a largest benefit after simplification are determined through screening. For example, as shown in Table 6, the load ratio of the program (1308) in the first row of the table is the highest, that is, 7.70%. Therefore, a benefit of simplifying the shader bound to the program (1308) is the highest.

In some embodiments of this application, a shader bound to a program with a highest load ratio in the heavy load scenario may be used as a to-be-simplified shader. For example, the shader bound to the program (1308) is determined as the to-be-simplified shader.

In other embodiments, a plurality of shaders corresponding to a plurality of programs whose cumulative load ratios exceed a preset load ratio threshold may be used as to-be-simplified shaders based on a load ratio sorting result. The load ratio threshold may be 80%, 85%, or the like. For example, the load ratio threshold is 80%. With reference to Table 10, in the current scenario, the cumulative load ratios of the program (1308), the program (70), the program (1336), the program (1302), and the program (1267) reach 79.66. Therefore, the shaders corresponding to the program (1308), the program (70), the program (1336), the program (1302), and the program (1267) may be determined as to-be-simplified shaders.

In the foregoing example, that a heavy load shader is obtained through screening based on load sorting in a time dimension is used as an example for description. In some other implementations of this application, the heavy load shader may alternatively be obtained through screening based on other information such as a code size of a shader pair bound to the program.

In this way, one or more to-be-simplified shaders (that is, heavy load shaders) may be determined through screening based on information about each shader during game running in a heavy load scenario.

Then, these shaders may be simplified to obtain corresponding source code or binary code of the simplified shaders.

For example, the source code of the heavy load shader may be obtained, to separately perform syntax abstraction on the vertex shader and the pixel shader, and perform expression deletion and code movement simplification on an abstraction result. The simplified shader generates a plurality of simplified variants. Rendering duration and picture quality error calculation is separately performed on the plurality of simplified variants, to select a simplified variant with optimal rendering time within a picture quality error acceptable range.

The simplified variant may be a simplified shader corresponding to the heavy load shader.

For example, in some implementations of this application, after code of the simplified shader corresponding to the heavy load shader is determined, the code may be replaced with an original running instruction stream for verification, and it is determined, based on whether a verification result exceeds a picture quality threshold, whether the simplified shader meets a requirement. If the verification result does not exceed the picture quality threshold, it indicates that picture quality does not change significantly before and after the replacement. Therefore, the simplified variant may be determined as a simplified shader corresponding to the heavy load shader. On the contrary, if the verification result exceeds the picture quality threshold, it indicates that the picture quality changes significantly before and after the replacement, which may be perceived by the user, and consequently there is a risk of affecting user experience. In this case, another simplified variant may be replaced, and picture quality verification is performed again until a simplified variant whose verification result is lower than the picture quality threshold is found. The simplified variant is used as a simplified shader corresponding to the heavy load shader.

In a possible implementation, a structural similarity (Structural Similarity, SSIM) may be used as a verification result through verification. Correspondingly, the picture quality threshold may be set as a minimum SSIM (such as 0.975) that can be identified by a human eye.

Therefore, a simplified shader corresponding to a heavy load shader that has no significant effect on picture quality can be obtained.

For a scenario of a plurality of heavy load shaders, the foregoing solution may be separately executed on the heavy load shaders to obtain respective simplified shaders.

Therefore, one or more to-be-simplified shaders may be determined. Code of these shaders may be separately stored in the memory of the electronic device, to perform any one of the foregoing solutions shown in FIG. 5 to FIG. 10.

The foregoing mainly describes the solutions provided in embodiments of this application from a perspective of the modules. To implement the foregoing functions, the foregoing functions include a hardware structure and/or a software module that execute corresponding functions. A person skilled in the art should easily aware that, with reference to the units and algorithm steps of the examples described in embodiments disclosed in this specification, this application can be implemented in a form of hardware or a combination of hardware and computer software. Whether a function is executed in a hardware or computer software-driven hardware manner depends on a specific application and design constraint condition of a technical solution. A person skilled in the art may use different methods for each specific application to implement the described functions, but this implementation should not be considered to be beyond the scope of this application.

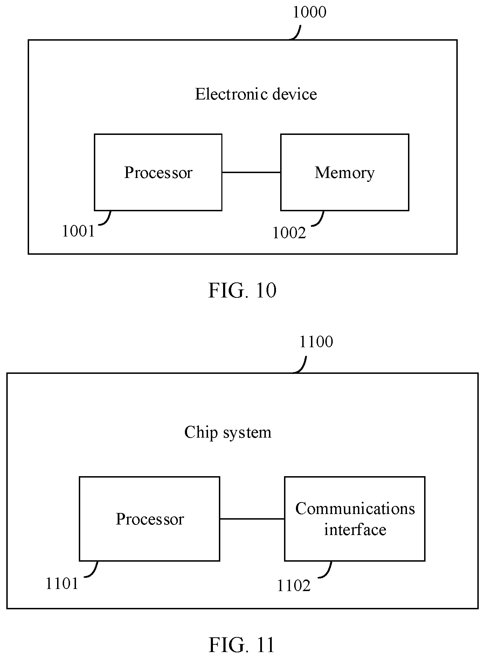

FIG. 10 is a schematic composition diagram of an electronic device according to an embodiment of this application. The electronic device may be the foregoing electronic device on which a game application is installed.

As shown in FIG. 10, the electronic device 1000 may include a processor 1001 and a memory 1002. The memory 1002 is configured to store computer-executable instructions. For example, in some embodiments, when the processor 1001 executes the instructions stored in the memory 1002, the electronic device 1000 may be enabled to perform any one of the image processing methods in the foregoing embodiments.

It should be noted that all related content of the steps in the foregoing method embodiments may be referenced to function descriptions of corresponding functional modules, and details are not described herein again.

FIG. 11 is a schematic composition diagram of a chip system 1100. The chip system 1100 may include a processor 1101 and a communications interface 1102, to support a related device to implement the functions in the foregoing embodiments. In a possible design, the chip system further includes a memory, configured to store a program instruction and data that are required by the terminal. The chip system may include a chip, or may include a chip and another discrete component. It should be noted that, in some implementations of this application, the communications interface 1102 may also be referred to as an interface circuit.

It should be noted that all related content of the steps in the foregoing method embodiments may be referenced to function descriptions of corresponding functional modules, and details are not described herein again.

All or some of the functions, actions, operations, or steps in the foregoing embodiments may be implemented by software, hardware, firmware, or any combination thereof. When being implemented by using a software program, all or some of the foregoing embodiments may be implemented in a form of a computer program product. The computer program product includes one or more computer instructions. When computer program instructions are loaded and executed on a computer, all or some of the procedures or the functions described in embodiments of this application are generated. The computer may be a general-purpose computer, a dedicated computer, a computer network, or another programmable apparatus. The computer instructions may be stored in a computer-readable storage medium, or transmitted from one computer-readable storage medium to another computer-readable storage medium, for example, transmitted from one website site, computer, server, or data center to another website site, computer, server, or data center in a wired (for example, coaxial cable, optical fiber, or digital subscriber line (digital subscriber line, DSL)) manner or a wireless (for example, infrared, wireless, or microwave) manner. The computer-readable storage medium may be any available medium accessible by a computer or a data storage device such as a server or a data center integrating one or more available media. The available medium may be a magnetic medium (for example, a floppy disk, a hard disk, a magnetic tape), an optical medium (for example, a DVD), or a semiconductor medium (for example, a solid-state drive (solid state disk, SSD)).

Although this application is described with reference to specific features and embodiments thereof, it is clear that various modifications and combinations may be made without departing from the scope of the claims. Accordingly, this specification and the accompanying drawings are merely example descriptions of this application as defined in the appended claims, and are considered to cover any and all modifications, variations, combinations, within the scope of this application. It is clear that a person skilled in the art may make various changes and variations to this application without departing from the scope of this application. In this way, if these modifications and variations of this application fall within the scope of the claims of this application, this application is also intended to include these modifications and variations.

## Claims

1. An image processing method, applied to an electronic device, wherein an application is installed on the electronic device, the electronic device executes a rendering instruction stream delivered by the application, and the method comprises:
obtaining (S901), by the electronic device, a second shader based on the rendering instruction stream;
determining (S905), by the electronic device, a first shader based on the second shader, wherein the first shader corresponds to the second shader, the first shader and the second shader are of a same type, the first shader is different from the second shader, the first shader is configured to implement the same shading function of the second shader, and the first shader has less code than the second shader;
unbinding, by the electronic device, the second shader from a first program, wherein the second shader is a shader bound to the first program indicated by a second shading instruction, and the second shading instruction is comprised in the rendering instruction stream;
binding, by the electronic device, a first shader to the first program, replacing (906) the second shader with the first shader;
invoking (S907), by the electronic device, a graphics processing unit GPU to perform a shading operation by using a first shading instruction, wherein a shader bound to the first program indicated by the first shading instruction comprises the first shader;
**characterized by**:
wherein the electronic device obtains code of a plurality of third shaders, the code of the plurality of third shaders comprises code of the first shader, and the determining the first shader based on the second shader comprises:
determining the code of the first shader based on code of the second shader such that the code of the first shader corresponds to the code of the second shader;
wherein the electronic device further stores code of a plurality of fourth shaders, the code of the plurality of fourth shaders is in a one-to-one correspondence with that of the plurality of third shaders, and the code of the plurality of fourth shaders comprises source code or binary code;
wherein the code of the plurality of fourth shaders comprises code of a fifth shader, the code of the fifth shader matches the code of the second shader, and the fifth shader corresponds to the first shader; and the determining the first shader based on the second shader comprises:
obtaining (S903) the code of the second shader based on a storage address of the second shader;
matching (S904) the code of the second shader against the code of the plurality of fourth shaders, to obtain the fifth shader; and
obtaining the first shader from the plurality of third shaders by using the fifth shader and the one-to-one correspondence between the plurality of fourth shaders and the plurality of third shaders.

2. The method according to claim 1, wherein binding the first shader to the first program comprises:
binding a storage address of binary code of the first shader to the first program;
binding an identifier of the first shader to the first program.

3. The method according to claim 1 or 2, wherein, before invoking a graphics processing unit GPU to perform a shading operation by using a first shading instruction, the method further comprises:
compiling source code of the first shader into binary code; and
storing the binary code of the first shader.

4. The method according to any one of claims 1 to 3, wherein before the binding, by the electronic device, the first shader to the first program, the method further comprises:
obtaining (S902), by the electronic device, an identifier of the first program based on the rendering instruction stream.

5. The method according to any one of claims 1 to 4, wherein the electronic device stores the code of the plurality of third shaders, and the obtaining code of a plurality of third shaders comprises:
reading the code of the plurality of third shaders from an address for storing the code of the plurality of third shaders.

6. The method according to any one of claims 1 to 5, wherein the obtaining the second shader based on the rendering instruction stream is specifically:
obtaining the identifier and the
storage address of the second shader based on the rendering instruction stream, wherein the storage address stores the code of the second shader, and the code comprises source code or binary code.

7. The method according to any one of claims 1 to 6, wherein that the code of the fifth shader matches the code of the second shader is specifically:
the code of the fifth shader is the same as the code of the second shader, or a hash value of the code of the fifth shader is the same as a hash value of the code of the second shader.

8. The method according to any one of claims 1 to 7, wherein
both the first shader and the second shader are vertex shaders; or
both the first shader and the second shader are fragment shaders.

9. An electronic device, wherein the electronic device comprises one or more processors and one or more memories, the one or more memories are coupled to the one or more processors, and the one or more memories store computer instructions; and
when the one or more processors execute the computer instructions, the electronic device is enabled to perform the image processing method according to any one of claims 1 to 8.

10. A computer-readable storage medium, wherein the computer-readable storage medium comprises computer instructions, and when the computer instructions are run, the image processing method according to any one of claims 1 to 8 is performed.

## Patentansprüche

1. Ein Bildverarbeitungsverfahren, angewendet auf ein elektronisches Gerät, wobei eine Anwendung auf dem elektronischen Gerät installiert ist, das elektronische Gerät einen durch die Anwendung bereitgestellten Rendering-Befehlstrom ausführt und das Verfahren Folgendes umfasst:
Erhalten (S901) eines zweiten Shaders durch das elektronische Gerät auf Basis des Rendering-Befehlstroms;
Bestimmen (S905) eines ersten Shaders durch das elektronische Gerät auf Basis des zweiten Shaders, wobei der erste Shader dem zweiten Shader entspricht, der erste Shader und der zweite Shader vom gleichen Typ sind, der erste Shader sich vom zweiten Shader unterscheidet, der erste Shader dazu konfiguriert ist, die gleiche Shading-Funktion wie der zweite Shader auszuführen und der erste Shader weniger Code als der zweite Shader enthält;
Entbindung des zweiten Shaders durch das elektronische Gerät von einem ersten Programm, wobei der zweite Shader ein an das erste Programm gebundener Shader ist, der durch eine zweite Shading-Anweisung angezeigt wird und die zweite Shading-Anweisung im Rendering-Befehlstrom enthalten ist;
Bindung eines ersten Shaders durch das elektronische Gerät an das erste Programm und Ersetzung (906) des zweiten Shaders durch den ersten Shader;
Aufruf (S907) einer Grafikeinheit (GPU) durch das elektronische Gerät, um eine Shading-Operation unter Verwendung einer ersten Shading-Anweisung auszuführen, wobei ein an das erste Programm gebundener Shader, der durch die erste Shading-Anweisung angezeigt wird, den ersten Shader umfasst;
**Gekennzeichnet durch**: wobei das elektronische Gerät Code einer Vielzahl dritter Shader erhält, der Code der Vielzahl dritter Shader den Code des ersten Shaders umfasst und das Bestimmen des ersten Shaders auf Basis des zweiten Shaders umfasst:
Bestimmen des Codes des ersten Shaders auf Basis des Codes des zweiten Shaders, so dass der Code des ersten Shaders dem Code des zweiten Shaders entspricht;
Wobei das elektronische Gerät zusätzlich Code einer Vielzahl vierter Shader speichert, der Code der Vielzahl vierter Shader eindeutig dem Code der Vielzahl dritter Shader entspricht und der Code der Vielzahl vierter Shader Quellcode oder Binärcode umfasst;
Wobei der Code der Vielzahl vierter Shader den Code eines fünften Shaders umfasst, der Code des fünften Shaders mit dem Code des zweiten Shaders übereinstimmt und der fünfte Shader dem ersten Shader entspricht; und das Bestimmen des ersten Shaders auf Basis des zweiten Shaders umfasst:
Erhalten (S903) des Codes des zweiten Shaders auf Basis einer Speicheradresse des zweiten Shaders;
Abgleich (S904) des Codes des zweiten Shaders mit dem Code der Vielzahl vierter Shader, um den fünften Shader zu erhalten; und
Das Erhalten des ersten Shaders aus der Vielzahl dritter Shader unter Verwendung des fünften Shaders und der Eins-zu-eins-Korrespondenz zwischen der Vielzahl vierter Shader und der Vielzahl dritter Shader.

2. Verfahren nach Anspruch 1, wobei das Binden des ersten Shaders an das erste Programm Folgendes umfasst:
Das Binden einer Speicheradresse des Binärcodes des ersten Shaders an das erste Programm;
Das Binden eines Identifikators des ersten Shaders an das erste Programm.

3. Verfahren nach Anspruch 1 oder 2, wobei vor dem Aufrufen einer Grafikverarbeitungseinheit (GPU) zum Ausführen eines Shading-Vorgangs mittels einer ersten Shading-Anweisung das Verfahren ferner Folgendes umfasst:
Das Kompilieren des Quellcodes des ersten Shaders in Binärcode; und
Das Speichern des Binärcodes des ersten Shaders.

4. Verfahren nach einem der Ansprüche 1 bis 3, wobei vor dem Binden des ersten Shaders an das erste Programm durch das elektronische Gerät das Verfahren ferner Folgendes umfasst:
Das Erhalten (S902) eines Identifikators des ersten Programms durch das elektronische Gerät basierend auf dem Rendering-Befehlsstrom.

5. Verfahren nach einem der Ansprüche 1 bis 4, wobei das elektronische Gerät den Code der Vielzahl dritter Shader speichert und das Erhalten des Codes einer Vielzahl dritter Shader Folgendes umfasst:
Das Auslesen des Codes der Vielzahl dritter Shader von einer Adresse zum Speichern des Codes der Vielzahl dritter Shader.

6. Verfahren nach einem der Ansprüche 1 bis 5, wobei das Erhalten des zweiten Shaders basierend auf dem Rendering-Befehlsstrom im Besonderen Folgendes ist:
Das Erhalten des Identifikators und der Speicheradresse des zweiten Shaders basierend auf dem Rendering-Befehlsstrom, wobei die Speicheradresse den Code des zweiten Shaders speichert und der Code Quellcode oder Binärcode umfasst.

7. Verfahren nach einem der Ansprüche 1 bis 6, wobei der Code des fünften Shaders mit dem Code des zweiten Shaders übereinstimmt, ist insbesondere:
Der Code des fünften Shaders ist identisch mit dem Code des zweiten Shaders oder ein Hashwert des Codes des fünften Shaders ist identisch mit einem Hashwert des Codes des zweiten Shaders.

8. Verfahren nach einem der Ansprüche 1 bis 7, wobei
sowohl der erste Shader als auch der zweite Shader Vertex-Shader sind; oder
sowohl der erste Shader als auch der zweite Shader Fragment-Shader sind.

9. Eine elektronische Vorrichtung, wobei die elektronische Vorrichtung einen oder mehrere Prozessoren und einen oder mehrere Speicher umfasst, die einen oder mehrere Speicher mit den einen oder mehreren Prozessoren gekoppelt sind und die einen oder mehrere Speicher Computeranweisungen speichern; und
wenn die einen oder mehreren Prozessoren die Computeranweisungen ausführen, ist die elektronische Vorrichtung dazu befähigt, das Bildverarbeitungsverfahren gemäß einem der Ansprüche 1 bis 8 auszuführen.

10. Ein computerlesbares Speichermedium, wobei das computerlesbare Speichermedium Computeranweisungen umfasst und beim Ausführen der Computeranweisungen das Bildverarbeitungsverfahren gemäß einem der Ansprüche 1 bis 8 ausgeführt wird.

## Revendications

1. Un procédé de traitement d'image, appliqué à un dispositif électronique, dans lequel une application est installée sur le dispositif électronique, le dispositif électronique exécute un flux d'instructions de rendu délivré par l'application, et le procédé comprend :
obtention (S901), par le dispositif électronique, d'un deuxième shader basé sur le flux d'instructions de rendu ;
détermination (S905), par le dispositif électronique, d'un premier shader basé sur le deuxième shader, le premier shader correspondant au deuxième shader, le premier shader et le deuxième shader étant de même type, le premier shader étant différent du deuxième shader, le premier shader étant configuré pour implémenter la même fonction d'ombrage que le deuxième shader, et le premier shader ayant moins de code que le deuxième shader ;
dissociation, par le dispositif électronique, du deuxième shader d'un premier programme, le deuxième shader étant un shader associé au premier programme indiqué par une deuxième instruction d'ombrage, et la deuxième instruction d'ombrage étant comprise dans le flux d'instructions de rendu ;
association, par le dispositif électronique, d'un premier shader au premier programme, remplacement (906), du deuxième shader par le premier shader ;
appel (S907), par le dispositif électronique, d'une unité de traitement graphique GPU pour exécuter une opération d'ombrage en utilisant une première instruction d'ombrage, un shader associé au premier programme indiqué par la première instruction d'ombrage comprenant le premier shader ;
**caractérisé en ce que** : le dispositif électronique obtient le code d'une pluralité de troisièmes shaders, le code de la pluralité de troisièmes shaders comprenant le code du premier shader, et la détermination du premier shader sur la base du deuxième shader comprend :
déterminer le code du premier shader sur la base du code du deuxième shader de sorte que le code du premier shader corresponde au code du deuxième shader ;
où le dispositif électronique stocke en outre le code d'une pluralité de quatrièmes shaders, le code de la pluralité de quatrièmes shaders correspondant un-à-un à celui de la pluralité de troisièmes shaders, et le code de la pluralité de quatrièmes shaders comprenant du code source ou du code binaire ;
où le code de la pluralité de quatrièmes shaders comprend le code d'un cinquième shader, le code du cinquième shader correspondant au code du deuxième shader, et le cinquième shader correspondant au premier shader ; et la détermination du premier shader sur la base du deuxième shader comprend :
obtention (S903) du code du deuxième shader en fonction d'une adresse de stockage du deuxième shader ;
correspondance (S904) du code du deuxième shader avec le code de la pluralité de quatrièmes shaders, pour obtenir le cinquième shader ; et
obtention du premier shader parmi la pluralité de troisièmes shaders en utilisant le cinquième shader et la correspondance un-à-un entre la pluralité de quatrièmes shaders et la pluralité de troisièmes shaders.

2. Le procédé selon la revendication 1, dans lequel l'association du premier shader au premier programme comprend :
associer une adresse de stockage du code binaire du premier shader au premier programme ;
associer un identifiant du premier shader au premier programme.

3. Le procédé selon la revendication 1 ou 2, dans lequel, avant d'invoquer une unité de traitement graphique GPU pour effectuer une opération de shading à l'aide d'une première instruction de shading, le procédé comprend en outre :
compiler le code source du premier shader en code binaire ; et
stocker le code binaire du premier shader.

4. Le procédé selon l'une quelconque des revendications 1 à 3, dans lequel, avant l'association par le dispositif électronique du premier shader au premier programme, le procédé comprend en outre :
obtention (S902), par le dispositif électronique, d'un identifiant du premier programme basé sur le flux d'instructions de rendu.

5. Le procédé selon l'une quelconque des revendications 1 à 4, dans lequel le dispositif électronique stocke le code de la pluralité de troisièmes shaders, et l'obtention du code de la pluralité de troisièmes shaders comprend :
lecture du code de la pluralité de troisièmes shaders à partir d'une adresse de stockage du code de la pluralité de troisièmes shaders.

6. Le procédé selon l'une quelconque des revendications 1 à 5, dans lequel l'obtention du second shader sur la base du flux d'instructions de rendu est spécifiquement :
obtention de l'identifiant et de l'adresse de stockage du second shader sur la base du flux d'instructions de rendu, où l'adresse de stockage contient le code du second shader, et le code comprend un code source ou un code binaire.

7. Le procédé selon l'une quelconque des revendications 1 à 6, dans lequel le code du cinquième shader correspond au code du second shader est spécifiquement :
le code du cinquième shader est identique au code du second shader, ou la valeur de hachage du code du cinquième shader est identique à la valeur de hachage du code du second shader.

8. Le procédé selon l'une quelconque des revendications 1 à 7, dans lequel
le premier shader et le second shader sont tous deux des vertex shaders ; ou
le premier shader et le second shader sont tous deux des fragment shaders.

9. Un dispositif électronique, dans lequel le dispositif électronique comprend un ou plusieurs processeurs et une ou plusieurs mémoires, lesdites mémoires étant couplées auxdits processeurs, et lesdites mémoires stockent des instructions informatiques ; et
lorsque le ou les processeurs exécutent les instructions informatiques, le dispositif électronique est configuré pour mettre en œuvre le procédé de traitement d'image selon l'une quelconque des revendications 1 à 8.

10. Un support de stockage lisible par ordinateur, dans lequel le support de stockage comprend des instructions informatiques, et lorsque les instructions informatiques sont exécutées, le procédé de traitement d'image selon l'une quelconque des revendications 1 à 8 est mis en œuvre.
